# EUROPEAN PATENT APPLICATION

(11) **EP 3 624 247 A1**
(43) Date of publication of application: **18.03.2020**
(21) Application number: 18194653.4
(22) Date of filing: 14.09.2018
(51) Int. Cl.: H01M 10/054, H01M 10/0562

(54) **A FAST IONIC CONDUCTOR WITH STOICHIOMETRY MG(BH4)2·XNH3**

(71) Applicant: Aarhus Universitet, 8000 Aarhus C (DK)
(72) Inventor: Grinderslev, Jakob Bæk, 8000 Aarhus C (DK); Jensen, Torben René, 7120 Vejle Ø (DK); Yan, Yigang, 8230 Åbyhøj (DK); Jørgensen, Mathias, 8000 Aarhus C (DK)
(74) Representative: Plougmann Vingtoft a/s

(57) **Abstract**

There is presented a composition of matter comprising a substance or composition with average chemical formula Mg(BH₄)₂·xNH₃, wherein x is non-integer and less than 2.2, such as 1<x<2, and optionally further comprising an additive, such as an oxide optinonally being in the form of nanoparticles. The composition of matter may be advantageous for being based on the abundant element magnesium and/or for exhibiting a very high ionic conductivity and/or very low electronic conductivity. In an example there is presented LiBH₄-0.5NH₃-Li₂O and a method of manufacture.

## Description

### FIELD OF THE INVENTION

The present invention relates to fast ionic conductors, such as solid electrolytes, and more particularly to a composition of matter comprising a substance or composition with average chemical formula Mg(BH₄)₂·xNH₃, and a corresponding method of manufacture, product by process, battery and use.

### BACKGROUND OF THE INVENTION

Today, human energy consumption is mainly based on fossil fuels and we discard the spent fuel, carbon dioxide, into nature. 'Tomorrow', we need to rely on fluctuating sources of renewable energy, which occur as electricity or heat from sun and wind. Storage of this energy is essential to adapt the energy production to the oscillating human energy demand. The success of the rechargeable lithium batteries are indisputable, but the limited progress in improving energy densities and the low abundances of Li is also becoming very clear. Therefore, alternatives receive increasing attention.

A key challenge for development of an alternative battery is to identify a suitable solid state electrolyte. To operate a battery, a conductivity of ∼1 mS cm⁻¹ is often cited as the required conductivity for electrolytes with thicknesses < 25 µm. Furthermore, it may be challenging to achieve attractive ion-migration at the general operation temperature window of a rechargeable battery, *i.e.* -20 to 80 °C.

Hence, an improved fast ion conductor, such as a solid state electrolyte, would be advantageous, and in particular a fast ion conductor based on an abundant element, showing high ionic conductivity at the general operation temperature window of rechargeable battery would be advantageous.

### SUMMARY OF THE INVENTION

In particular, it may be seen as an object of the present invention to provide a fast ion conductor that solves the above mentioned problems of the prior art with, such as being based on an abundant element, showing high ionic conductivity at the general operation temperature window of rechargeable battery. It is a further object of the present invention to provide an alternative to the prior art.

Thus, the above described object and several other objects are intended to be obtained in a first aspect of the invention by providing a composition of matter comprising a substance or composition with average chemical formula Mg(BH₄)₂·xNH₃, wherein x is non-integer and less than 2.2, such as 1.0<x<2.0, such as 1.05<x<1.95.

The invention is particularly, but not exclusively, advantageous for providing a composition of matter, which may have a high ionic conductivity, such as a high ionic conductivity at 50 °C or at 323.15 K. It may in particular be noted, that high ionic conductivity at relatively low temperatures, such as 50 °C, may in particular be relevant for everyday applications, such as mobile electronic devices (such as laptops, smartphones) or automobiles. Another possible advantage may be that the electronic conductivity is negligible. Another possible advantage may be that the ionic conductivity (for example at 50 °C) is higher than what would be expected from the values of x being integers. For example, the ionic conductivity for x=0.4 is higher than what would be expected from the values of the ionic conductivities at x=0 and x=1. This might make it advantageous to provide a non-integer composition rather than, e.g., preparing a substance with x=0. Furthermore, it might provide a route to utilizing the substance with x=0, because even though the ionic conductivity of that composition might be unacceptably low, the substance may nevertheless be utilized because the ionic conductivity of mixture with that substance resulting in a composition, e.g., with 0<x<1, may have an ionic conductivity being acceptable. Another possible advantage may be that it comprises, such as consists of elements, which are abundant, such as magnesium.

Another possible advantage may be, that the material is relatively fire proof. This may for example enable a relatively fire proof electrochemical cell (e.g., with respect to a lithium polymer battery).

A composition of matter may, cf., W. Robinson, The Law of Patents for Useful Inventions 278-79 (1890), be seen as an instrument formed by the intermixture of two or more ingredients, and possessing properties which belong to none of these ingredients in their separate state. The intermixture of ingredients in a composition of matter may be produced by mechanical or chemical operations, and its result may be a compound substance resolvable into its constituent elements by mechanical processes, or a new substance which can be destroyed only by chemical analysis (such as wherein the new substance is a molecular or crystalline compound).

The value of x may be equal to or less than 2.15, such as x may be equal to or less than 2.1, such as x may be equal to or less than 2.0, such as x may be equal to or less than 1.95, such as x may be equal to or less than 1.9, such as x may be equal to or less than 1.8, such as x may be equal to or less than 1.7, such as x may be equal to or less than 1.6. The value of x may be limited to above a certain value, optionally in combination with a limitation to being below another certain value in the previous sentence, such as x being equal to or larger than 0.7, such as as x being equal to or larger than 0.75, such as x being equal to or larger than 0.8, such as x being equal to or larger than 0.9, such as x being equal to or larger than 1.0, such as x being equal to or larger than 1.05, such as x being equal to or larger than 1.1, such as x being equal to or larger than 1.2, such as x being equal to or larger than 1.3, such as x being equal to or larger than 1.4, such as x being equal to or larger than 1.5, such as x being equal to or larger than 1.6. The value of x may be confined within a certain range, optionally in combination with a limitation to being above or/and below another certain value in the two previous sentences, such as 0.8<x<2.2, such as 0.8<x<2.15, such as 0.9<x<2.15, such as 0.9<x<2.1, such as 1.0<x<2.0, such as 1.05<x<1.95, such as 1.1<x<1.9, such as 1.2<x<1.9, as 1.3<x<1.9, as 1.4<x<1.8, as 1.5<x<1.7. The value of x may be a certain value, such as any one of x=0.4, 0.9, 1.1, 1.4, 1.5, 1.6, 1.8, 2.1.

It may be understood, that zero is an integer, i.e., x is non-zero. By 'non-integer' may be understood that the x value is not an integer and optionally that the x value is at least an absolute value of 0.05 away from any integer value, such as x not being within [0;0.05[ and not being within ]0.95; 1.05[ and not being within ]1.95;2.05[. It may thus be understood that the composition with average chemical formula Mg(BH₄)₂·xNH₃, may be a mixture of substances with the chemical fomulas, respectively, Mg(BH₄)₂·yNH₃ and Mg(BH₄)₂·zNH₃, with each and both of y and z being integers.

By "chemical formula" is understood any substance or composition having the corresponding stoichiometry. This does not necessarily imply, that a substance, such as a molecule or a crystal, with the present formula is present.

By 'average' (chemical formula) is understood, that the chemical formula may be representative of a substance or a mixture of substances, which corresponds to the chemical formula when averaged across a region, such as a volume, e.g., a cube with 1 nanometer, such as 10 nanometer, such as 100 nanometer, such as 1 micrometer, such as 10 micrometer, such as 100 micrometer, such as 1 millimeter, sides.

According to an embodiment of the invention the the composition of matter is further comprising an additive, such as an inert additive, such as a crystalline and inert additive. The additive may be added in an amount (with respect to the composition of matter) of at least 5 wt%, such as at least 10 wt%, such as at least 20 wt%, such as at least 25 wt%, such as at least 30 wt%, such as at least 40 wt%, such as at least 50 wt%, such as at least 60 wt%, such as at least 70 wt%, such as at least 75 wt%, such as at least 80 wt%, such as at least 90 wt%. The additive may be added in an amount (with respect to the composition of matter) of at most 90 wt%, such as at most 80 wt%, such as at most 75 wt%, such as at most 70 wt%, such as at most 60 wt%, such as at most 50 wt%, such as at most 40 wt%, such as at most 30 wt%, such as at most 25 wt%, such as at most 20 wt%, such as at most 10 wt%, such as at most 5 wt%. The additive may be added in an amount (with respect to the composition of matter) of within 20-80 wt% or within 45-80 %, such as within 25-75 wt%, such as within 30-70 wt%, such as within 40-60 wt% (reference to "within" may imply both endpoints excluded). A possible advantage of an additive may be, that it enables stabilizing the structure of the eutectic composition (which may have favourable ionic conductivity), which may be produced by decreasing the temperature from above the eutectic temperature to below the eutectic temperature. Another possible advantage may be that the additive enables increasing the ionic conductivity. The additive may, for example, comprise, such as consist of, MgO, SiO₂ or Al₂O₃. The additive may be particles dispersed in the substance or composition with average chemical formula Mg(BH₄)₂·xNH₃. Another possible advantage of comprising an additive may be that the composition of matter may be tailored to achieve certain properties, e.g., being cheaper. Another possible advantage of adding an additive, such as an additive in the form of particles, may be that it improves the mechanical properties, such makes the composition of matter harder (such as increases a Young's modulus).

By 'additive' may be understood a substance or composition different from the substance or composition with average chemical formula Mg(BH₄)₂·xNH₃. It may be understood that the composition of matter comprising the additive is a composite, such as a composite material.

A 'composite' or 'composite material' may be understood to be a material made from two or more constituent materials with significantly different physical or chemical properties that, when combined, produce a material with characteristics different from the individual components. The individual components remain separate and distinct within the finished structure.

The additive may be inert, which may be understood as is common in the art, and in particular as stable and unreactive towards from the substance or composition with average chemical formula Mg(BH₄)₂·xNH₃ at least under conditions of a temperature of 298.15 K (or 25 °C) in an argon atmosphere with absolute pressure of 100 kPa (or 14.504 psi or 0.987 atm), less than 1 ppm CO₂, less than 1 ppm H₂O, and less than 1 ppm O2.

According to an embodiment of the invention there is presented a composition of matter, wherein 1<x<2, such as 1.05<x<1.95, such as 1.10<x<1.9, such as 1.55<x<1.65, such as 1.57<x<1.63, such as 1.575<x<1.625, such as x=1.6 (or such as 1.10<x<1.9, such as 1.45<x<1.55, such as 1.475<x<1.525, such as 1.49<x<1.51, such as x=1.5). An advantage of this range may be that the ionic conductivites are particularly high in this range. Another possible advantage may be that values in this range may be achieved by a mixture of substances with the chemical fomulas, respectively, Mg(BH₄)₂·yNH₃ and Mg(BH₄)₂·zNH₃, with y and z being 1 and 2, respectively. The substance or composition with average chemical formula Mg(BH₄)₂·xNH₃ might then be produced according to, and be the result of, the eutectic system formed from the binary chemical mixture of Mg(BH₄)₂·yNH₃ and Mg(BH₄)₂·zNH₃, with y and z being 1 and 2, respectively. This may be advantageous, e.g., for allowing forming substantially the eutectic composition, such as 1.4<x<1.6, such as x=1.6, which may have a particularly high ionic conductivity. Another possible advantage may be that it enables melting at a particularly low (and hence energy-efficient) temperature because the eutectic temperature (melting point of the mixture) is lower than the melting point of either of Mg(BH₄)₂·yNH₃ and Mg(BH₄)₂·zNH₃, with y and z being 1 and 2, respectively.

It may be noted that the material Mg(BH₄)₂-xNH₃, 1< x <2, may not be a simple mixture of two compounds, Mg(BH₄)₂·1NH₃ and Mg(BH₄)₂-2NH₃, but may form an amorphous structure, which leads to a particularly fast ion conduction. Furthermore, a beneficial effect of additives, such as MgO, SiO₂ and Al₂O₃ nanopowders, may be very important, because they stabilize the amorphous structure at temperatures below 55 °C, such as at or below room temperature (where room temperature may be 25 °C or 298.15 K). Notice that diffraction down to -120 °C was measured, and there was no crystallisation within 1 hour.

According to an embodiment of the invention there is presented a composition of matter comprising, such as consisting of one or more, regions, such as grains or crystals, having an eutectic composition, such as an eutectic composition for the binary chemical mixture with the two components being Mg(BH₄)₂·xNH₃ with x=1 and Mg(BH₄)₂·xNH₃ with x = 2. A possible advantage may be that this may result in a composition of matter comprising regions having an eutectic composition that may have particularly high ionic conductivity.

According to an embodiment of the invention there is presented a composition of matter comprising, such as consisting of, an amorphous or non-crystalline substance or composition, such as grains. A possible advantage of this may be that a composition of matter comprising an amorphous substance or composition may have particularly high ionic conductivity.

The property 'amorphous' is to be understood as is common in the art. The property 'non-crystalline' is to be understood as is common in the art. More particularly, by amorphous or non-crystalline may be understood that a degree of crystallinity, such as a degree of long-range crystalline order, is smaller than for the purely crystalline substance or composition, such as at least 5 wt%, such as at least 10 wt%, such as at least 25 wt%, such as at least 30 wt%, such as at least 50 wt%, such as at least 75 wt%, such as at least 90 wt%, such as at least 99 wt%, of the substance or composition being amorphous. The degree of crystallinity can be measured using powder X-ray diffraction (PXRD). The amount of the substance or composition may be determined with nuclear magnetic resonance (NMR) and/or the degree of crystallinity may be determined with x-ray powder diffraction (XRPD), such as using Rietveld refinement. For example, if the NMR data reveals that the composition of matter comprises Mg(BH₄)₂·1NH₃ and Mg(BH₄)₂·2NH₃, then it is comprising an amorphous substance or composition if Mg(BH₄)₂·1NH₃ and/or Mg(BH₄)₂·2NH₃ is amorphous, such as if at least 5 wt%, such as at least 10 wt%, such as at least 25 wt%, such as at least 30 wt%, such as at least 50 wt%, such as at least 75 wt%, such as at least 90 wt%, such as at least 99 wt%, of Mg(BH₄)₂·1NH₃ or of Mg(BH₄)₂·2NH₃ is amorphous. In embodiments, the composition of matter comprises Mg(BH₄)₂·1NH₃ or Mg(BH₄)₂·2NH₃ of which at least 5 wt%, such as at least 10 wt%, such as at least 25 wt%, such as at least 30 wt%, such as at least 50 wt%, such as at least 75 wt%, such as at least 90 wt%, such as at least 99 wt%, of either or both of Mg(BH₄)₂·1NH₃ and/or Mg(BH₄)₂·2NH₃ is amorphous.

According to an embodiment of the invention there is presented a composition of matter, wherein the ionic conductivity, such as the magnesium ionic conductivity (σ(Mg²⁺)), at a temperature of 323.15 K or at 50 °C of the composition of matter is larger than 4x10⁻⁷ S·cm⁻¹, such as equal to or larger than 5x10⁻⁷ S·cm⁻¹ S·cm⁻¹, such as equal to or larger than 1x10⁻⁶ S·cm⁻¹, such as equal to or larger than 3x10⁻⁶ S·cm⁻¹, such as equal to or larger than 1x10⁻⁵ S·cm⁻¹, such as equal to or larger than 3x10⁻⁵ S·cm⁻¹, such as equal to or larger than 1x10⁻⁴ S·cm⁻¹, such as equal to or larger than 3x10⁻⁴ S·cm⁻¹, such as equal to or larger than 3.5x10⁻⁴ S·cm⁻¹. A high ionic conductivity may be useful, e.g, in case the composition of matter is used as an electrolyte, a solid electrolyte and/or a fast ionic conductor in a battery. This may in particular be the case for a temperature, which is within the general operation temperature window of rechargeable battery, i.e. -20 to 80 °C.

According to an embodiment of the invention there is presented a composition of matter, wherein the ionic conductivity, such as the magnesium ionic conductivity (σ(Mg²⁺)), at a temperature of 353.15 K or at 80 °C of the composition of matter is larger than 6x10⁻⁵ S·cm⁻¹, such as equal to or larger than 1x10⁻⁶ S·cm⁻¹ S·cm⁻¹, such as equal to or larger than 3x10⁻⁶ S·cm⁻¹, such as equal to or larger than 1x10⁻⁵ S·cm⁻¹, such as equal to or larger than 3x10⁻⁵ S·cm⁻¹, such as equal to or larger than 1x10⁻⁴ S·cm⁻¹, such as equal to or larger than 3x10⁻⁴ S·cm⁻¹, such as equal to or larger than 1 mS·cm⁻¹, such as equal to or larger than 2 mS·cm⁻¹, such as equal to or larger than 2.3 mS·cm⁻¹. A high ionic conductivity may be useful, e.g, in case the composition of matter is used as an electrolyte, a solid electrolyte and/or a fast ionic conductor in a battery. This may in particular be the case for a temperature, which is within the general operation temperature window of rechargeable battery, i.e. -20 to 80 °C.

According to an embodiment of the invention there is presented a composition of matter comprising, such as consisting of, an amorphous substance or composition, such as grains, which is capable of remaining amorphous during a period of 168 hours (or 7 days), such as 240 hours (or 10 days), such as 336 hours (or 14 days), such as 720 hours (or 30 days), such as 960 hours (or 40 days), such as 50 days. It may be understood that the capability of remaining amorphous may be at specific conditions, such as at a temperature of 298.15 K (or 25 °C) and in an argon atmosphere with absolute pressure of 100 kPa (or 14.504 psi or 0.987 atm), less than 1 ppm CO₂, less than 1 ppm H₂O, and less than 1 ppm O₂. An advantage of remaining amorphous may be that the ionic conductivity is higher in the amorphous state.

According to an embodiment of the invention there is presented a composition of matter further comprising an additive, wherein the additive has an electronic conductivity smaller than σ < 10⁻⁷ S cm⁻¹, such as smaller than σ<10⁻⁸ S cm⁻¹, such as smaller than σ<10⁻⁹ S cm⁻¹, such as smaller than σ<10⁻¹⁰ S cm⁻¹, such as smaller than σ<10⁻¹¹ S cm⁻¹, such as smaller than σ<10⁻¹² S cm⁻¹, at a temperature of 298.15 K (or 25 °C).

According to an embodiment of the invention there is presented a composition of matter further comprising an additive, wherein the additive is an oxide, such as any one or more of, MgO, SiO₂ and Al₂O₃. Alternatively, the additive may be a halide. A composition of matter with an additive in the form of Al₂O₃ has also been realized. A composition of matter with an additive in the form of SiO₂ has also been realized.

According to an embodiment of the invention there is presented a composition of matter further comprising an additive, wherein the additive comprises particles with a largest dimension being less than 1 mm, such as less than 0.1 mm, such as less than 10 micrometer, such as less than 1 micrometer, such as less than 0.5 micrometer, such as less than 0.25 micrometer, such as less than 0.2 micrometer, such as less than 0.1 micrometer, such as less than 80 nm, such as less than 75 nm, such as less than 70 nm, such as less than 60 nm, such as less than 50 nm, such as less than 25 nm, such as less than 10 nanometer. Particles with a largest dimension being less than 1 mm may be referred to as microparticles. Such particles may serve to modify the properties of the composite material in which they are dispersed and/or embedded. For example, advantageous properties may be one or more of increased stability (such as capability of remaining in an amorphous phase for longer) and/or increased ionic conductivity. Another possible advantage may be that the mechanical properties is improved by the additive, for example so that a mechanically stable pellet or tablet can be prepared. An advantageous effect of modifying the properties of the composite material may be more pronounced if the largest dimension of the additive particles are even smaller, such as less than 0.1 mm, such as less than 10 micrometer, such as less than 1 micrometer, such as less than 0.5 micrometer, such as less than 0.25 micrometer, such as less than 0.2 micrometer, such as less than 0.1 micrometer, such as less than 10 nanometer.

The composition of matter, such as the composition of matter comprising an additive, may be a composite, such a microcomposite or a nanocomposite. A microcomposite and a nanocomposite may each be a multiphase solid material where one of the phases has one, two or three dimensions of less than, respectively, 100 micrometers (µm) or 100 nanometers (nm), or structures having, respectively, micro- or nano-scale repeat distances between the different phases that make up the material. Microscale may be defined as 100 nanometers-100 micrometers. Nanoscale may be defined as 100 picometers-100 nanometers.

According to an embodiment of the invention there is presented a composition of matter, wherein the composition of matter is a fast ionic conductor, such as σ(Mg²⁺) > 10⁻⁴ S cm⁻¹ at a temperature of 298.15 K (or 25 °C). The composition of matter may furthermore be an electrolyte, such as a solid electrolyte. A solid electrolyte has ionic conductivity (σᵢ) larger than, such as at least 10², such as at least 10³, such as at least 10⁴, such as at least 10⁵, such as at least 10⁶ times larger than the electronic conductivity (σₑ).

According to an embodiment of the invention there is presented a composition of matter wherein the composition of matter is compatible with metallic magnesium. By 'compatible with metallic magnesium' may be understood that reversible magnesium (Mg) plating/stripping chemistry can be enabled. This may in particular be advantageous for enabling that metallic magnesium can be employed as electrode material in a battery where the composition of matter is employed as electrolyte, such as solid electrolyte.

According to an embodiment of the invention there is presented a composition of matter wherein the electrochemical window, such as the electrochemical stability window, (vs Mg/Mg²⁺) is equal to or larger than 1.2 V, such as larger than 1.5 V, such as larger than 2.0 V, such as equal to or larger than 2.5 V. The electrochemical (stability) window is understood as is common in the art, such as the voltage range between which the composition or substance is neither oxidized nor reduced. The electrochemical window may be understood to be measured in an electrochemical cell at 333.15 K (or at 60 °C) vs. Mg/Mg²⁺ at a scanning rate of 10 mV/s. The measurement may start right after 20 cycles of striping/plating at a scanning rate of 10 mV/s, e.g., between -0.5 to 1.2 V.

According to a second aspect, there is presented a battery or an electrochemical cell comprising a composition of matter according to the first aspect, such as a battery with an electrode wherein the electrode comprises (such as consists of) magnesium.

Alternatively, the compostion of matter may be employed for a myriad of other applications, for example for hydrogen storage, such as solid state hydrogen storage.

According to a third aspect, there is presented a method for preparing a composition of matter according to the first aspect, said method comprising
- Providing a mixture of a plurality of reactants including:
   i. a compound with stoichiometric formula Mg(BH₄)₂·yNH₃, and
   ii. a compound with stoichiometric formula Mg(BH₄)₂·zNH₃, where y<x<z , such as y=1 and/or z=2,
- subjecting said mixture to a mechanochemical treatment.

The values of each of y and z are integer values, where integers are understood to include 0 (zero), i.e., y can be 0 (zero). The mechanochemical treatment may be ball-milling. An advantage of employing mechanochemical treatment, such as ball milling, may be that while a substance with (integer) x=2 can be made by heating x=6 in vacuum, the substance with (integer) x=1 and the compositions with (non-integer) x<2.2 (such as x<2.0) can be made, such as can only be made, mechanochemically. The substance with (integer) x=1 and the compositions with (non-integer) x<2.2 (such as x<2.0) can be made by mechanochemical treatment of appropriate mixtures of Mg(BH₄)₂ and Mg(BH₄)₂·6NH₃.

A possible advantage of having y and z being, respectively, 1 and 2, may be advantageous, e.g., for enabling that the substance or composition with average chemical formula Mg(BH₄)₂·xNH₃ might be produced according to, and be the result of, the eutectic system formed from the binary chemical mixture of Mg(BH₄)₂·yNH₃ and Mg(BH₄)₂·zNH₃, with y and z being 1 and 2, respectively. Another possible advantage may be that it is allowing forming substantially the eutectic composition, such as 1.4<x<1.6, such as x=1.6, which may have a particularly high ionic conductivity. Another possible advantage may be that it enables melting at a particularly low (and hence energy-efficient) temperature because the eutectic temperature (melting point of the mixture) is lower than the melting point of either of Mg(BH₄)₂·yNH₃ and Mg(BH₄)₂·zNH₃, with y and z being 1 and 2, respectively.

According to an embodiment of the invention there is presented a method for preparing a composition of matter, said method further comprising subsequent to the mechanochemical treatment
- heating the mixture above an eutectic temperature,
- cooling the mixture below the eutectic temperature to form an eutectic composition.
'Eutectic temperature' may be understood with reference to an eutectic system, such as the eutectic system formed from the binary chemical mixture of Mg(BH₄)₂·yNH₃ and Mg(BH₄)₂·zNH₃, with y and z being, respectively, 1 and 2. An advantage of this method may be that it enables providing a structure (at least in one or more portions of the composition of matter, such as in a matrix portion and/or in grains), such as an eutectic structure, which has advantageous properties, for example high ionic conductivity, such as high ionic conductivity at temperatures below the eutectic temperature. For example an ionic conductivity of the mixture measured before heating and cooling and at a temperature below the eutectic temperature may be relatively low in in comparison with an ionic conductivity of the mixture measured after heating and cooling and at the same temperature below the eutectic temperature. In other words, for the same elemental composition and at the same temperature, the ionic conductivity may be increased by the process of heating and cooling, possibly due to restructuring of one or more portions of the composition of matter into an eutectic structure.

According to an embodiment of the invention there is presented a method for preparing a composition of matter, said method further comprising solvent based synthesis (such as synthesis of Mg(BH₄)₂) and/or solid-gas reactions (such as synthesis of Mg(BH₄)₂-6NH₃ according to Mg(BH₄)₂ (s) + 6 NH₃ (g) --> Mg(BH₄)₂-6NH₃(s)) and/or gas-liquid synthesis (such as synthesis of Mg(BH₄)₂-6NH₃ by dissolving Mg(BH₄)₂(s) in dimethyl sulphide (DMS) and bubbling NH₃ through the solution and precipitating Mg(BH₄)₂-6NH₃).

According to a fourth aspect, there is presented a composition of matter prepared according to the third aspect.

According to a fifth aspect, there is presented use of a composition of matter according to the first aspect and/or prepared according to the third aspect for conducting an ionic current. Such use may be seen as relying on the insight made by the present inventors, that the composition of matter may have advantageous properties, such advantageous electrical properties, such as advantageous high ionic conductivity.

The first, second, third, fourth and fifth aspect of the present invention may each be combined with any of the other aspects. These and other aspects of the invention will be apparent from and elucidated with reference to the embodiments described hereinafter.

### BRIEF DESCRIPTION OF THE FIGURES

The composition of matter, battery or electrochemical cell, method and use according to the invention will now be described in more detail with regard to the accompanying figures. The figures show one way of implementing the present invention and is not to be construed as being limiting to other possible embodiments falling within the scope of the attached claim set.
Figure 1 shows ionic conductivity as a function of ammonia (NH₃) content (*x*) in the formula units for Mg(BH₄)₂·*x*NH₃ measured at *T* = 50 °C,
Figure 2 shows magnesium ionic conductivity as a function of temperature for a series of compounds Mg(BH₄)₂·*x*NH₃,
Figure 3 shows (a) *In-situ* synchrotron radiation X-ray powder diffraction (SR PXD) of Mg(BH₄)₂·*x*NH₃ (x=1.5),
Figure 4 illustrates the conduction channels of Mg(BH₄)₂·NH₃ along the *b*-direction, where zig-zag chains are formed,
Figure 5 shows a cyclic voltammogram of an Au/1.6NH₃@MgO/Mg cell at 60 °C,
Figs. 6-17 show Rietveld refinement plots of PXD data measured at room temperature,
Figure 18 shows a Nyquist plot of the nanocomposite Mg(BH₄)₂·1.6NH₃-MgO (mass ratio 3:1), denoted 1.6NH₃@MgO,
Figure 19 shows a cyclic voltammogram of an Au/1.6NH₃@MgO/Au cell at 25 °C,
Figure 20 shows temperature dependent ionic conductivities of Mg(BH₄)₂·*x*NH₃,

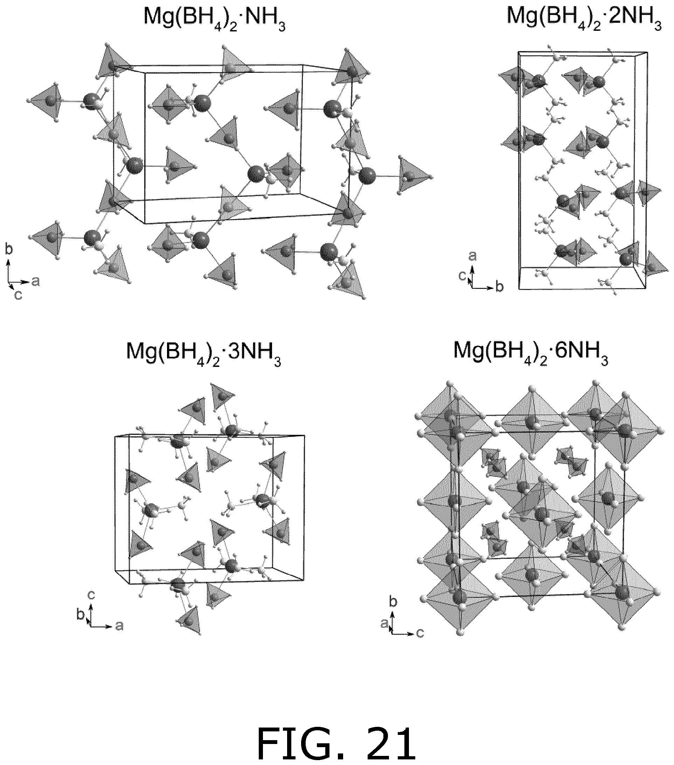

Figure 21 shows an overview of crystal structures of Mg(BH₄)₂·*x*NH₃,
Figure 22 shows cyclic voltammograms of an Au/1.6NH₃@MgO/Mg cell at 60 °C,
Figures 23-26 show *in situ* SR PXD patterns of Mg(BH₄)₂·*x*NH₃,
Figure 27 shows DSC profiles of Mg(BH₄)₂·*x*NH₃,
Figure 28 shows a mass spectra of sample *x*=1.5 and 1.5NH₃@MgO,
Figure 29 shows a shape change of a Mg(BH₄)₂·1.5NH₃,
Figure 30 shows transmission electron microscope (TEM) image,
Figure 31 shows scanning transmission electron microscopy (STEM) image and energy-dispersive X-ray spectroscopy (EDS) of a particle of 1.5NH₃@MgO nanocomposite.
Figure 32 shows PXD patterns of sample Mg(BH₄)₂·1.6NH₃, and the 1.6NH₃@MgO nanocomposite.
Figure 33 shows temperature dependent ionic conductivities of Mg(BH₄)₂·*x*NH₃, *x*=1.6 with, respectively, 50wt% SiO₂ (filled circles, denoted 1.6NH₃ + 50wt% SiO₂) and 60wt% Al₂O₃ (open squares, denoted 1.6NH₃ + 60wt% Al₂O3).
Figure 34 shows a diffraction pattern for Mg(BH₄)₂·1.6NH₃ at different time points.
Figure 35 shows an NMR spectra of the composite Mg(BH₄)₂·1.6NH₃.
Figure 36 shows temperature dependent ionic conductivities of LiBH₄, LiBH₄·NH₃, LiBH₄·½NH₃, and LiBH₄·½NH₃, with 75 wt% Li₂O.

### DETAILED DESCRIPTION OF AN EMBODIMENT

In the following embodiments according to the invention as well as examples useful for understanding the invention are described.

### Synthesis.

The dense polymorph of magnesium borohydride, α-Mg(BH₄)₂ was synthesized from dimethylsulfide borane (CH₃)₂S·BH₃ and dibutylmagnesium, Mg(*n*Bu)_{2.}^{24,25} (CH₃)₂S·BH₃ (10 mL, 10 M), Mg(*n*Bu)₂ (28 mL, 1 M) and toluene (40 mL) were mixed in a 250 mL filterflask, sealed in argon atmosphere. The mixture were left to stir for 1 day, after which the filtrate were removed by filtration. The white precipate were dried under dynamic vacuum for 1 hour at room temperature, after which it were transferred to three separate Schlenk tubes, heated to 140 °C for 2 hours in argon atmosphere, followed by 2 hours under dynamic vacuum. All sample handling are carried out using standard Schlenk techniques and argon glovebox.

Mg(BH₄)₂·6NH₃ was synthesized by exposure of α-Mg(BH₄)₂ to dry ammonia gas at a pressure of 1 bar for 2 h at room temperature. Mg(BH₄)₂·3NH₃ and Mg(BH₄)₂·2NH₃ were obtained by heating Mg(BH₄)₂·6NH₃ at 63 °C for 6 h and 90 °C for 4 h in dynamic vacuum, respectively. Composites Mg(BH₄)₂·xNH₃ (x=0.4, 0.9, 1.1, 1.4, 1.5, 1.6, 1.8, 2.1, 2.6, 4.5) and substance Mg(BH₄)₂·xNH₃ (x=1.0) were synthesized by ball milling Mg(BH₄)₂·6NH₃ and α-Mg(BH₄)₂ in individual molar ratios for 2 hours. The ball milling were carried out for 2 min with a 2 min pause for 60 repetitions at a speed of 200 rpm and a ball-to-powder weight ratio of 30:1.

An additive may be added, such as MgO (e.g., 75 wt%), SiO₂ (e.g., 50 wt %) or Al₂O₃ (e.g., 60 wt%). Mg(BH₄)₂·1.6NH₃ with additive MgO, denoted, 1.6NH₃@MgO, was synthesized by ball milling the as-synthesized Mg(BH₄)₂·1.6NH₃ and MgO in a mass ratio of 1 to 3 for 1 h. The powder was then annealed at 70 °C for 1 hour. Similar route was applied for the additives SiO₂ and Al₂O₃, albeit with mass ratio of Mg(BH₄)₂·1.6NH₃ to oxide exchanged, respectively, to 1:1 (Mg(BH₄)₂·1.6NH₃:SiO₂) and 1:1.5 (Mg(BH₄)₂·1.6NH₃:Al₂O₃).

### Characterization

Powder X-ray Diffraction (PXD) data was collected at room temperature (RT) on a Rigaku SMARTLAB diffractometer, equipped with a rotating Cu anode (Cu Kα radiation, 2 kW, λ = 1.54053 Å). The samples were packed in 0.5 mm o.d. capillary tubes in the glovebox, sealed with glue, and transferred to the instrument without air exposure.

*In situ* synchrotron radiation powder X-ray diffraction (SR-PXD) data of the Mg(BH₄)₂·*x*NH₃ were collected from X04SA beamline at Paul Scherrer Institute (PSI), Switzerland with λ = 0.708481 Å.

The crystal structures Mg(BH₄)₂·NH₃ were solved from the measured SR-PXD pattern using program FOX.²⁶

Electrochemical Impedance Spectroscopy data were collected on a BioLogic MTZ-35 impedance analyser equipped with a high temperature sample holder. Samples were pressed into 6.35 mm diameter pellets of ca. 1 mm thickness under the pressure of 0.63 GPa. All measurements were conducted in an argon atmosphere and temperature was measured by a K-type thermocouple 5 mm from the sample. Impedance data were measured at 20 mV ac from 3 MHz to 1 Hz. Ion conductivity data (*σ*) were derived from Nyquist impedance plots using the x-intercept of the Nyquist semicircle (*R*), area of the pellet face (*A*) and pellet thickness (*t*) according to: *σ* = *tl*(*R* × *A*).

Thermogravimetric analysis (TGA) and Differential scanning calorimetry (DSC) was conducted on a PerkinElmer STA 6,000, where 3-5 mg samples were placed in Al crucibles and heated at 5 °C per min under constant argon flow (50 mL·min⁻¹).

### Results

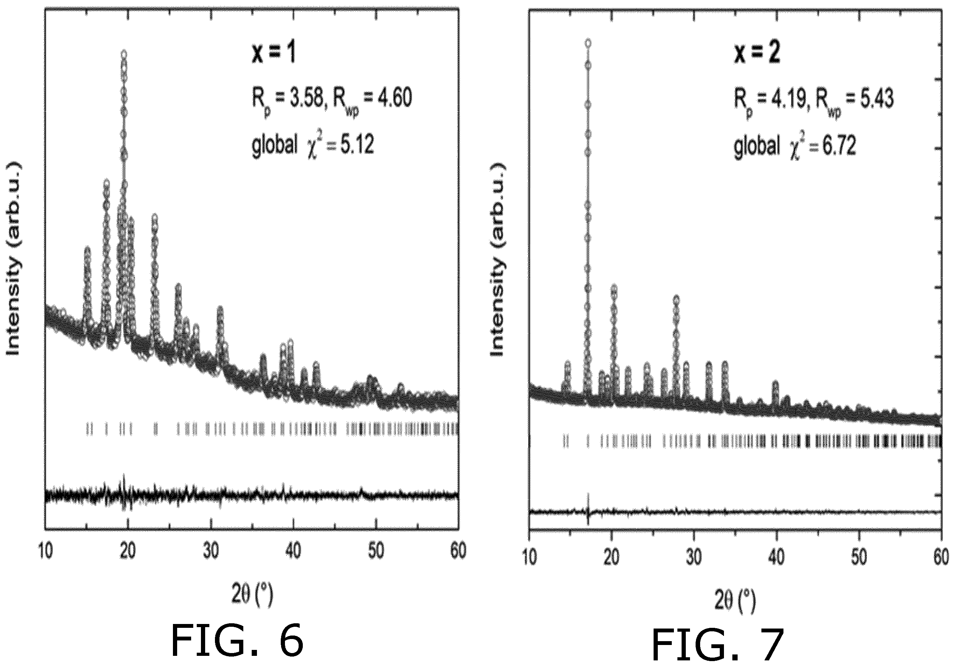

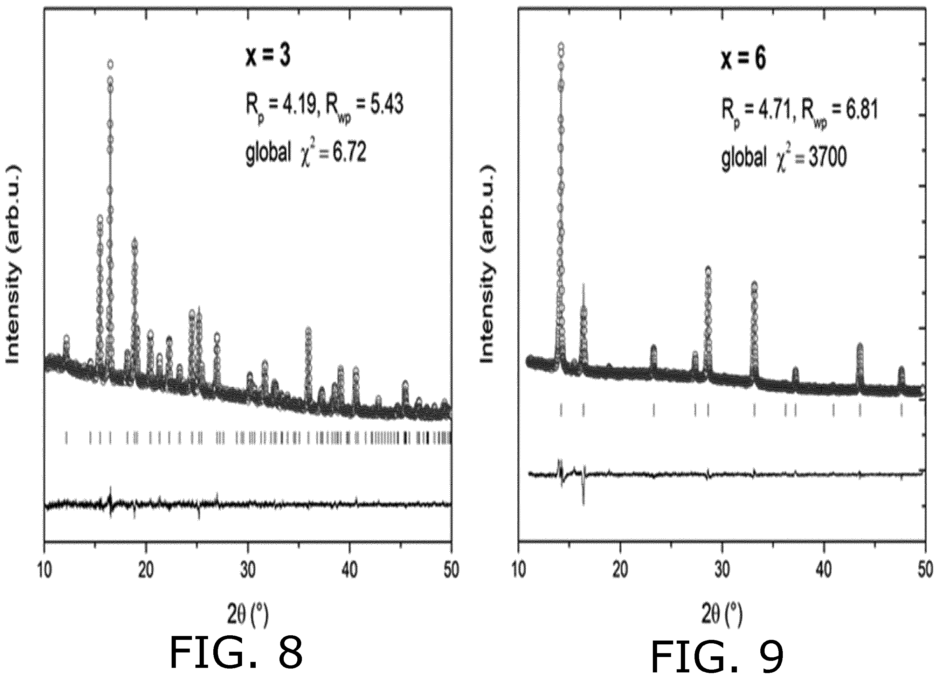

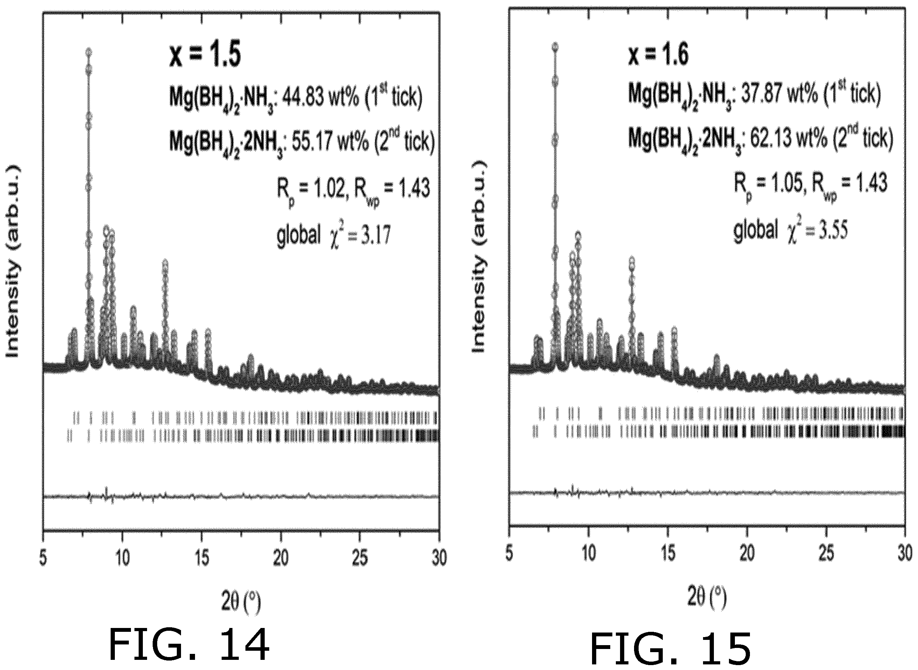

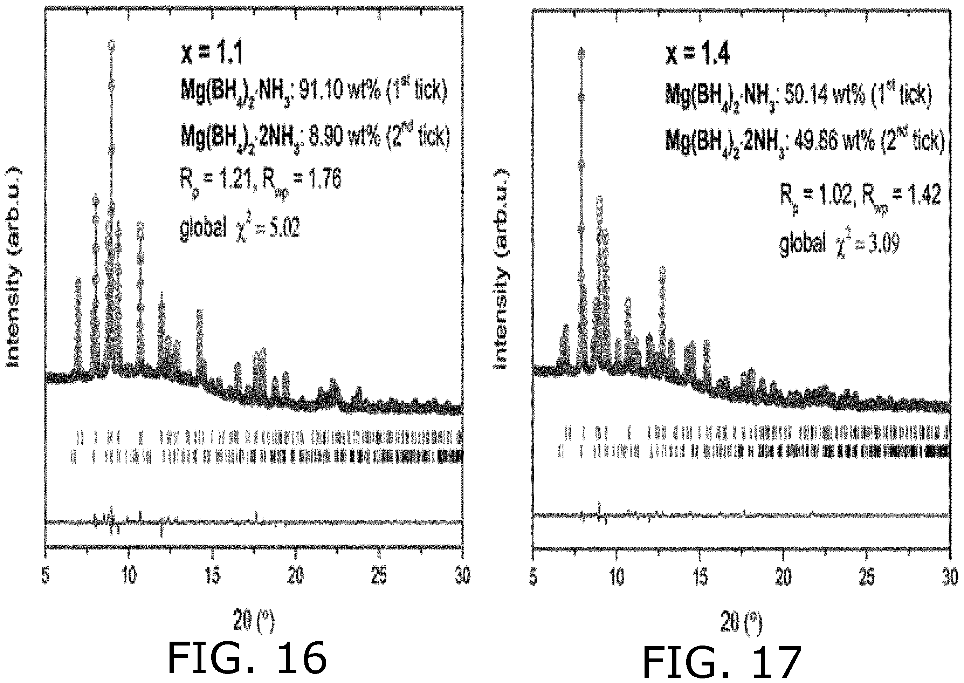

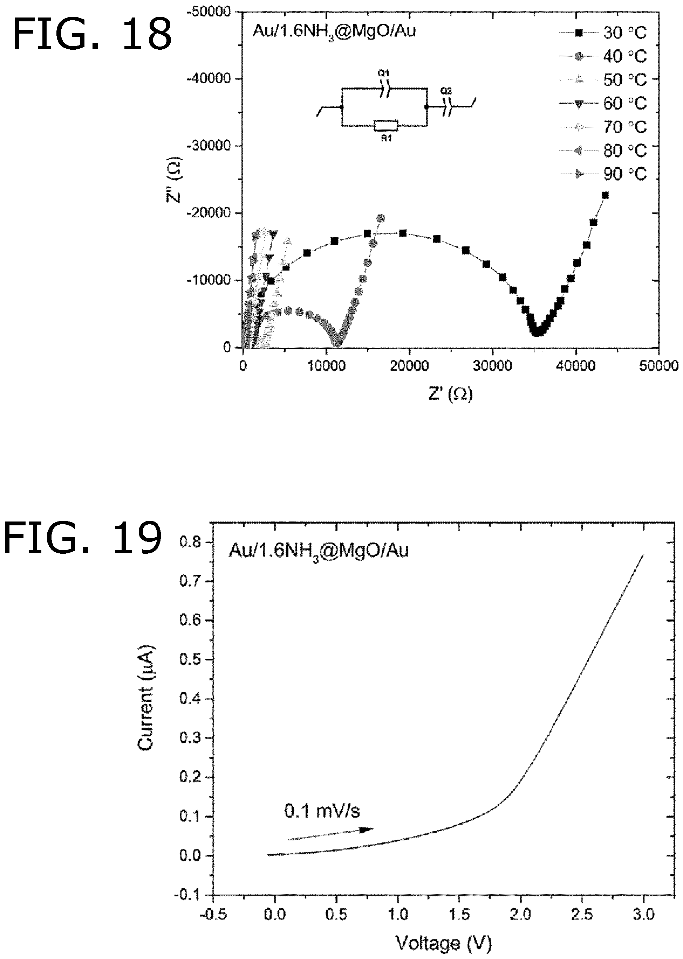

Hexaamine magnesium borohydride, Mg(BH₄)₂·6NH₃ was prepared *via* a solid-gas reaction of Mg(BH₄)₂ with NH₃ under ambient conditions. Compounds with integer values of, x = 2 and 3 were synthesized by heating of Mg(BH₄)₂·6NH₃ in vacuum. Compounds with an integer value of x = 1 and composites with non-integer values, 0 < x < 6, of Mg(BH₄)₂·xNH₃, was synthesized by mechanochemical treatment of appropriate amounts of Mg(BH₄)₂·6NH₃ and Mg(BH₄)_{2.} Composites are formed comprising, such as consisting of, two compounds with integer x-value just above or below the average ammonia content. These materials are characterized by powder X-ray diffraction as shown in Figs. 6-17. The ionic conductivities were calculated from the Nyquist plots and electrochemical data is provided in Fig. 18. Notice, that Nyquist plots consisting of a single semicircle and an electrode polarization spike is characteristic of pure ionic conductivity.

Figures 6-9 show Rietveld refinement plots of PXD data measured at room temperature, λ = 1.54056 Å, for Mg(BH₄)₂·*x*NH₃ (x = 1, 2, 3, 6), showing experimental (blue or grey circles) and calculated (red or grey line) PXD patterns, and a difference plot below (black line, shown in the bottom of each figure). Final discrepancy factors, Rₚ and R_{wp} (not corrected for background), and global χ² are shown. Mg(BH₄)₂·NH₃: *Pnma,* with unit cell parameters a = 11.2938(1) Å, b = 7.6224(1) Å, c = 6.8182(1) Å. Mg(BH₄)₂·2NH₃: *Pcab,* with unit cell parameters a = 17.4872(4) Å, b = 9.4132(2) Å, c = 8.7304(2) Å. Mg(BH₄)₂·3NH₃: *Pnma,* with unit cell parameters a = 11.4328 Å, b = 8.0869 Å, c = 9.4379 Å. Mg(BH₄)₂·6NH₃: *Fm-*3m, with unit cell parameter a = 10.7879 Å.

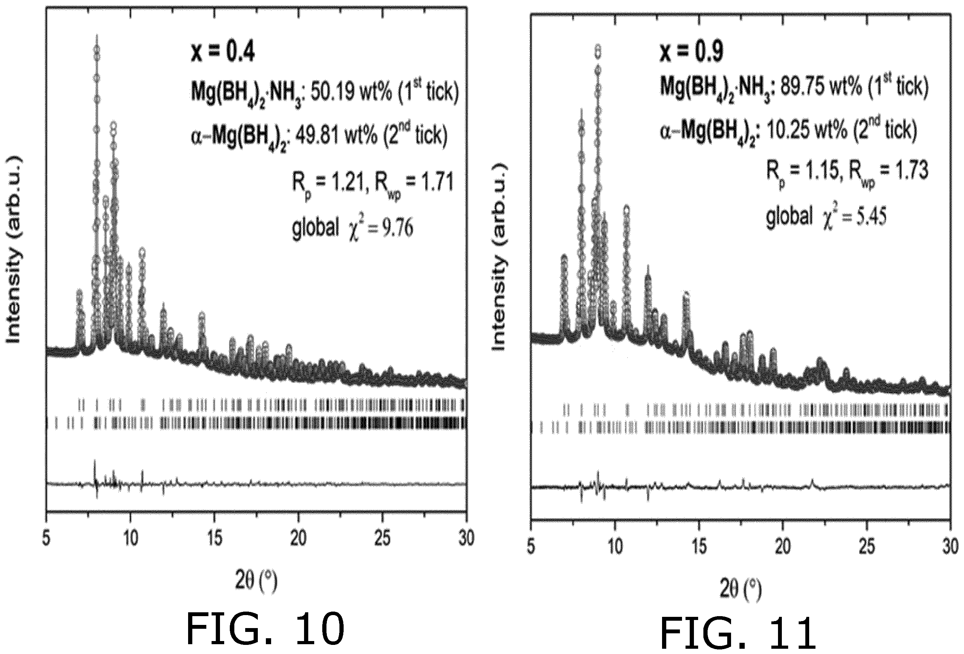

Figures 10-12 show Rietveld refinement plots of PXD data measured at room temperature, λ = 0.70848 Å, for Mg(BH₄)₂·*x*NH₃ (x = 0.4, 0.9, 2.1), showing experimental (blue or grey circles) and calculated (red or grey line) PXD patterns, and a difference plot below (black line, shown in the bottom of each figure). Final discrepancy factors, Rₚ and R_{wp} (not corrected for background), and global χ² are shown. *α*-Mg(BH₄)₂: *P*6₁22, with unit cell parameters a = 10.3540(12) Å, c = 37.055(4) Å. Mg(BH₄)₂·NH₃: *Pnma,* with unit cell parameters a = 11.2938(1) Å, b = 7.6224(1) Å, c = 6.8182(1) Å. Mg(BH₄)₂·2NH₃: *Pcab,* with unit cell parameters a = 17.4872(4) Å, b = 9.4132(2) Å, c = 8.7304(2) Å. Mg(BH₄)₂·3NH₃: *Pnma,* with unit cell parameters a = 11.4328 Å, b = 8.0869 Å, c = 9.4379 Å. Mg(BH₄)₂·6NH₃: *Fm-*3*m,* with unit cell parameters a = 10.7879 Å.

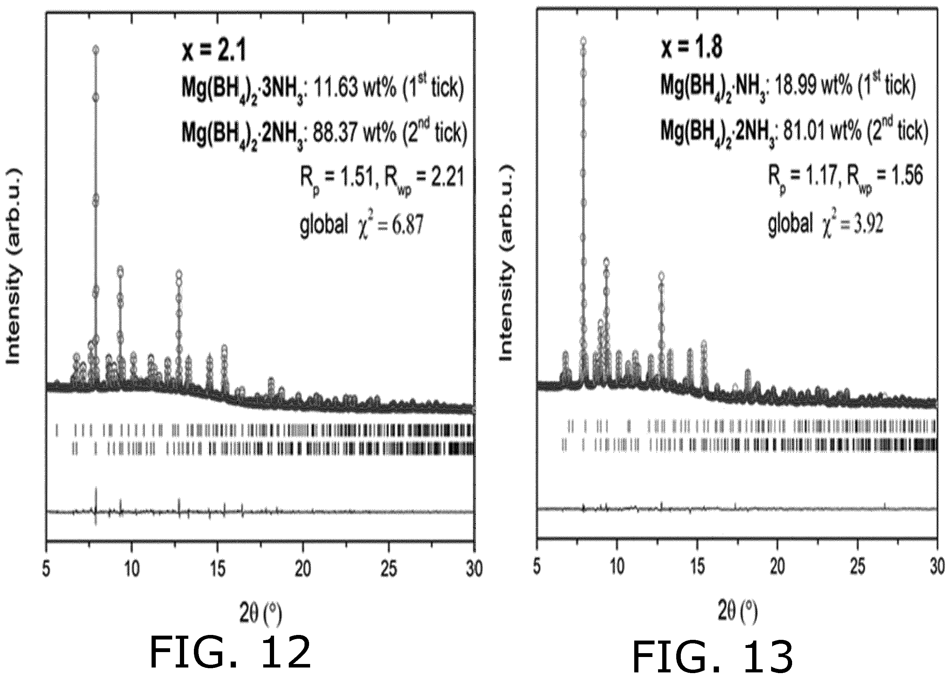

Figures 13-17 show Rietveld refinement plots of PXD data measured at room temperature, λ = 0.70848 Å, for Mg(BH₄)₂·*x*NH₃ (x = 1.1, 1.4, 1.5, 1.6, 1.8), showing experimental (blue or grey circles) and calculated (red or grey line) PXD patterns, and a difference plot below (black line, shown in the bottom of each figure). Final discrepancy factors, Rₚ and R_{wp} (not corrected for background), and global χ² are shown. Mg(BH₄)₂·NH₃: *Pnma,* with unit cell parameters a = 11.2938(1) Å, b = 7.6224(1) Å, c = 6.8182(1) Å. Mg(BH₄)₂·2NH₃: *Pcab,* with unit cell parameters a = 17.4872(4) Å, b = 9.4132(2) Å, c = 8.7304(2) Å.

Figure 18 shows a Nyquist plot of the nanocomposite Mg(BH₄)₂·1.6NH₃-MgO (mass ratio 3:1), denoted 1.6NH₃@MgO. A single semicircle and an electrode polarization spike are observed.

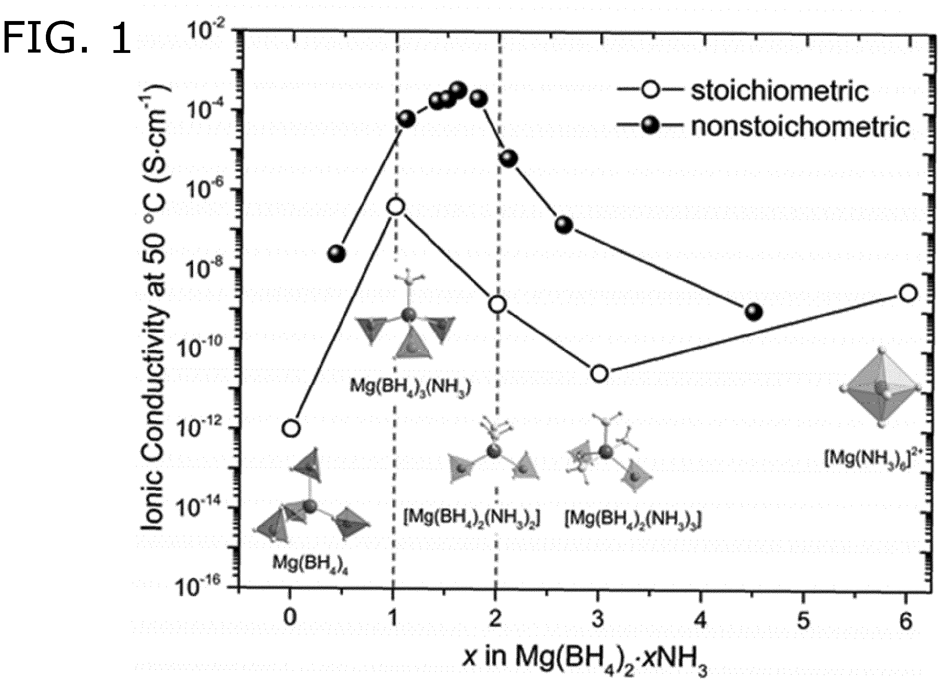

Figure 1 shows ionic conductivity as a function of ammonia (NH₃) content (x) in the formula units for Mg(BF[₄)₂·*x*NH₃ measured at *T* = 50 °C - all crystalline compounds. Samples were pressed into 6.35 mm diameter pellets of ca. 1 mm thickness under the pressure of 0.63 GPa. To improve the contacting, the powders were pressured in between two Au foils (thickness of 0.1 mm) forming a Au/sample/Au symmetric cell. The cell was heated to 50 °C with a ramp of 1 °C/min and kept for 60 min before the impedance measurement was started. Impedance data were recorded at 20 mV ac from 3 MHz to 1 Hz.

The "stoichiometric" compounds, Mg(BH₄)₂·*x*NH₃ with x having integer values (x having values of 0, 1, 2, 3 and 6) are shown as open spheres whereas "non-stoichiometric" composites with x having non-integer values (x having values of 0.4, 1.1, 1.4, 1.5, 1.6, 1.8, 2.1, 2.6 and 4.7) are black circles. By "stoichiometric" and "non-stoichiometric" is understood, respectively, integer and non-integer x-values, and non-stoichiometric does not imply that the material is homogeneous. The structural drawings illustrate the coordination of magnesium for the stoichiometric composition. Magnesium is shown as the largest (blue) spheres, boron as smaller (green) spheres, nitrogen still smaller (yellow) spheres and hydrogen is shown as the smallest (light gray) spheres.

The Mg²⁺ ionic conductivities measured at *T* = 50 °C are illustrated in Figure 1 as a function of NH₃ molecules in the compounds and composites, Mg(BH₄)₂·*x*NH₃. None of the substances or compositions have been heated above 50 °C. The highest Mg²⁺-ion conductivity of the compounds (i.e., with x being an integer) is observed of Mg(BH₄)₂·NH₃, σ(Mg²⁺) = 4.0×10⁻⁷ S cm⁻¹ (at *T* = 50 °C), whereas the other show lower conductivities of 1.5×10⁻⁹, 2.7×10⁻¹¹ and 3.3×10⁻⁹ S cm⁻¹, of Mg(BH₄)₂·2NH₃, Mg(BH₄)₂·3NH₃ and Mg(BH₄)₂·6NH₃, respectively. The composites with non-integer average x-values clearly has higher Mg²⁺ conductivities in particular those in the eutectic system of Mg(BH₄)₂·NH₃-Mg(BH₄)₂·2NH₃, for 1 < x < 2, with the maximum value σ(Mg²⁺) = 3.5×10⁻⁴ S cm⁻¹ measured for x = 1.6, *i.e.* 0.4Mg(BH₄)₂·NH₃-0.6Mg(BH₄)₂·2NH₃, denoted Mg(BH₄)₂·1.6NH₃. We note, that this value is more than 8 order of magnitudes higher than that of the precursor, Mg(BH₄)₂, σ(Mg²⁺) ∼ 1,0×10⁻¹² S cm⁻¹.

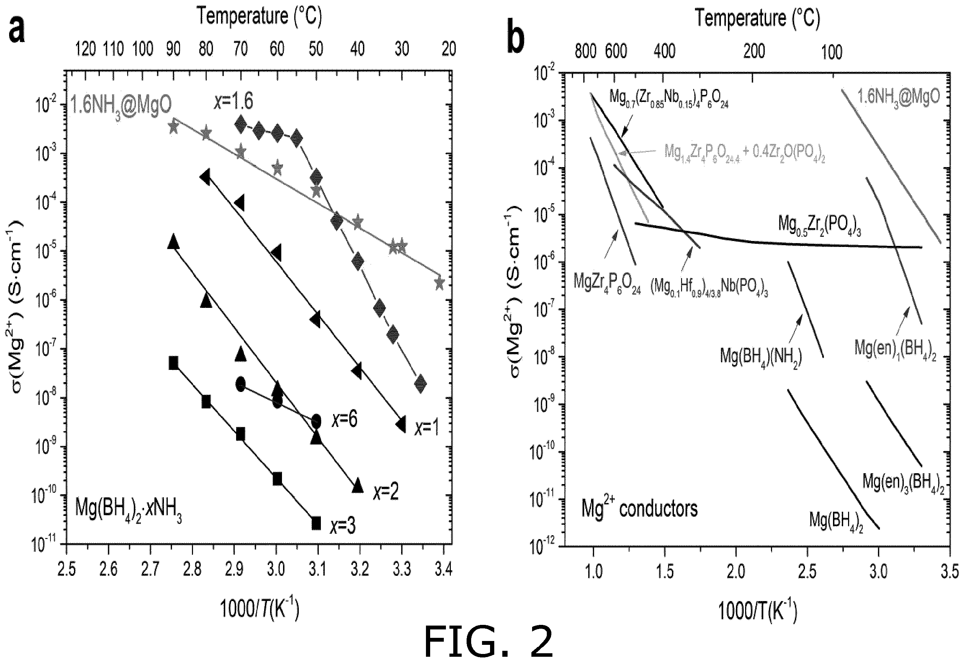

Figure 2 shows magnesium ionic conductivity as a function of temperature for the series of compounds Mg(BH₄)₂·*x*NH₃, x = 1, 2, 3 and 6, the composites *x*=1.6 (**a**), and the nanocomposite Mg(BH₄)₂·1.6NH₃-MgO (1:3 w/w), denoted 1.6NH₃@MgO. (**b**) Magnesium ionic conductivity as a function of temperature for highly conducting oxides^{7,17,18}, and hydrides^{19,20} compared to the new material 1.6NH₃@MgO.

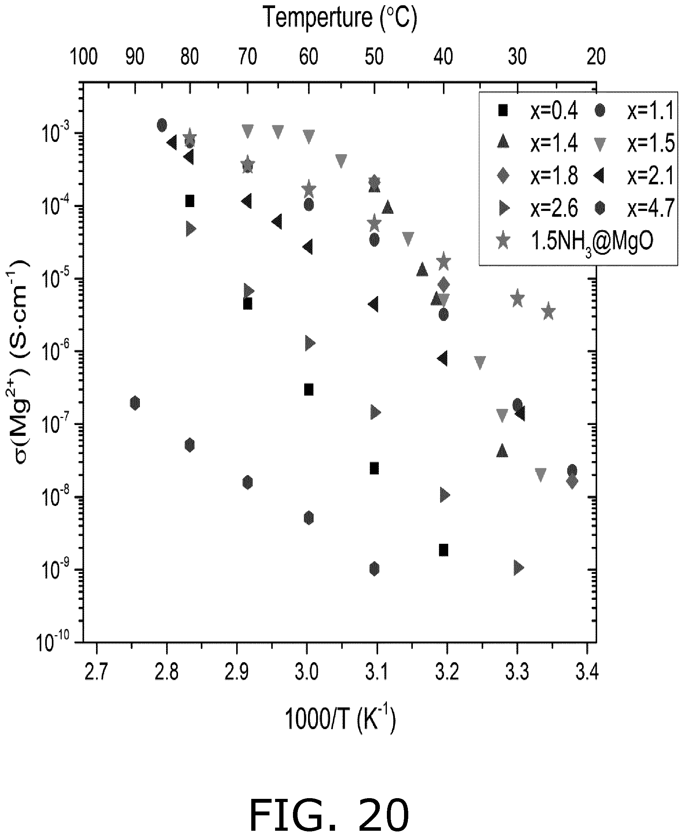

Fig. 2a shows the temperature-dependent Mg²⁺-ion conductivity of the compounds Mg(BH₄)₂·*x*NH₃, *x* = 1, 2, 3 and 6, compared to the composite *x*=1.6 and the conductivity of other selected compositions are shown in Fig. 20. The stoichiometric compounds, *x* = 1, 2, 3 and 6, reveal a linear increase of Mg²⁺ conductivity. The slope of the conductivity data for the composite *x* = 1.6 reveal an impressive decrease of activation energy for the Mg-ion conductivity by a factor ten from *E*ₐ = 3.0 eV (at *T <* 55 °C) to 0.3 eV (at *T >* 55 °C), with an impressive conductivity of σ(Mg²⁺) = 2.0 mS cm⁻¹ at 55 °C. This highly conductive state can be stabilized with MgO nanoparticles to obtain high Mg-ion conductivity at low temperature, such as below 55 °C (or 328.15 K), such as 22-55 °C (or 295.15-328.15 K). The nanocomposite Mg(BH₄)₂·1.6NH₃-MgO (mass ratio 3:1), denoted 1.6NH₃@MgO, has conductivities of 2.2×10⁻⁶ < σ(Mg²⁺) < 3.6×10⁻³ S cm⁻¹ in the temperature range 20 to 90 °C, and with an apparent activation energy *E*ₐ = 1.0 eV. It is noted that the composition of matter, such as the nanocomposite Mg(BH₄)₂·1.6NH₃-MgO (mass ratio 3:1), denoted 1.6NH₃@MgO, may be useful and applicable in a broad temperature range, such as in the temperature region [-20; +90] °C, such as in the temperature region [+20; +90] °C,

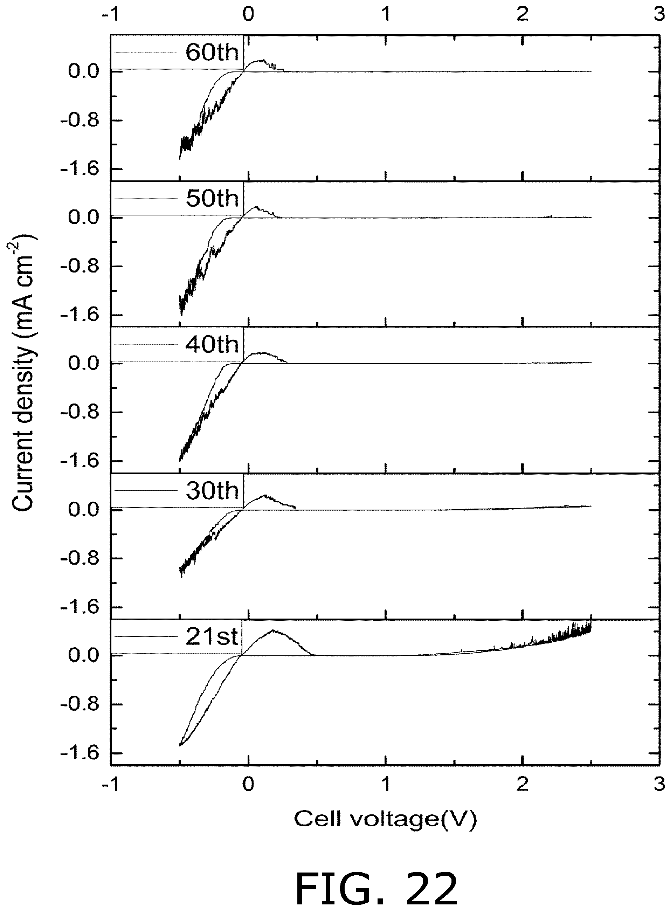

Another nanocomposite, 1.5NH₃@MgO, has similar conductivities of 3.6×10⁻⁶ < σ(Mg²⁺) < 8.5×10⁻⁴ S cm⁻¹ in the temperature range 26 to 80 °C and activation energy of *E*ₐ = 0.93 eV (Fig. 20). Interestingly, the conductivity of composite *x*=1.6, *e.g.* 3.5×10⁻⁴ S cm⁻¹ at 50 °C, is even higher than that of *x*=1.5, *e.g.* 2×10⁻⁴ S cm⁻¹ at 50 °C, and the latter possesses the eutectic composition (in the eutectic system formed from the binary chemical mixture of Mg(BH₄)₂·yNH₃ and Mg(BH₄)₂·zNH₃, with y and z being, respectively, 1 and 2). In parallel, the nanocomposite 1.6NH₃@MgO (PXD pattern in Fig. 22) is also more conductive than 1.5NH₃@MgO, *i.e.* σ(Mg²⁺) = 2.3×10⁻³ and 8.5×10⁻⁴ S cm⁻¹ at 80 °C, respectively.

Fig. 2b shows Magnesium ionic conductivity as a function of temperature for highly conducting oxides, and hydrides compared to the new material 1.6NH₃@MgO.

Figure 20 shows temperature dependent ionic conductivities of Mg(BH₄)₂·*x*NH₃, *x*=0.4, 1.1, 1.4, 1.5, 1.8, 2.1, and 4.7, and nanocomposite 1.5NH₃@MgO.

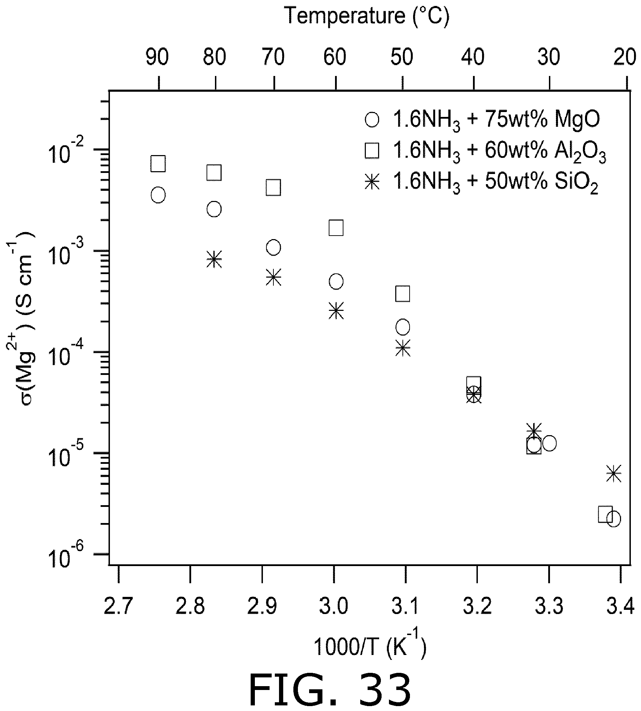

Figure 33 shows temperature dependent ionic conductivities of Mg(BH₄)₂·*x*NH₃, *x*=1.6 with, respectively, 50wt% SiO₂ (filled circles, denoted 1.6NH₃ + 50wt% SiO₂) and 60wt% Al₂O₃ (open squares, denoted 1.6NH₃ + 60wt% Al₂O3).

Figure 22 shows cyclic voltammograms of an Au/1.6NH₃@MgO/Mg cell at 60 °C. Scanning rate: 10 mV/s. This measurement started right after 20 cycles of striping/plating at a scanning rate of 10 mV/s between -0.5 to 1.2 V.

The conductivity of the 1.6NH₃@MgO composite is compared to other inorganic Mg-ion conductors in Figure 2b. Metal oxides reaches conductivities in the order of ∼1 mS cm⁻¹, but only at high temperatures, *T >* 600 °C. A recently reported chalgogenide, MgSc₂Se₄, has in fact very low ionic conductivity of σ(Mg²⁺) < 10⁻⁸ S cm⁻¹ (at room temperature) and similar electronic conductivity of σₑ = 10⁻¹⁰ S cm⁻¹ at room temperature.⁵ Complex metal hydrides, such as Mg(BH₄)(NH₂) and Mg(ethylenediamine)(BH₄)₂¹⁶, exhibit a conductivity of ∼10⁻⁶ S cm⁻¹ at *T* = 150 °C and 6×10⁻⁵ S cm⁻¹ at *T* = 70 °C, respectively.¹⁷ Thus, the 1.6NH₃@MgO composite shows the highest Mg-ion conductivity at near room temperature, *i.e.* σ(Mg²⁺) = 2.3 mS cm⁻¹ at 80 °C, which matches the general operation temperature window of a rechargeable battery, *i.e.* -20 to 80 °C.

The electronic conductivity is measured to σₑ = 3.9×10⁻⁹ S cm⁻¹ at 25 °C by linear fitting between 0 and 1.0 V of a symmetric Au/1.6NH₃@MgO/Au cell (Fig. 19).

Figure 19 shows a cyclic voltammogram of an Au/1.6NH₃@MgO/Au cell at 25 °C. The size of the 1.6NH₃@MgO pellet: 0.5 mm in thickness, 6.4 mm in diameter. Linear fitting between 0 and 1.0 V of a symmetric Au/1.6NH₃@MgO/Au cell generates a resistance of 4.2×10⁷ Ω, corresponding to the conductivity of 3.9×10⁻⁹ S cm⁻¹.

The electronic conductivity of Mg(BH₄)₂·1.6NH₃ is σₑ = 7×10⁻⁹ S cm⁻¹ at 25 °C.

### The composites (x non-integer)

The composites, Mg(BH₄)₂·*x*NH₃, *x* non-integer, all comprises, such as consists of, two compounds (where 'compound' may be referred to interchangeable with 'substance') with integer x values. This is clearly demonstrated by ²⁵Mg solid state magic angle spinning (MAS) NMR, which reveal a single sharp resonance from the individual compounds Mg(BH₄)₂·NH₃ and Mg(BH₄)₂·2NH₃. Two resonances, identical to those observed of Mg(BH₄)₂·NH₃ and Mg(BH₄)₂·2NH₃, are measured for the composite Mg(BH₄)₂·1.5NH₃. This observation further documents that Mg(BH₄)₂·1.5NH₃ is a physical mixture prepared mechano-chemically from Mg(BH₄)₂·NH₃ and Mg(BH₄)₂·2NH₃.

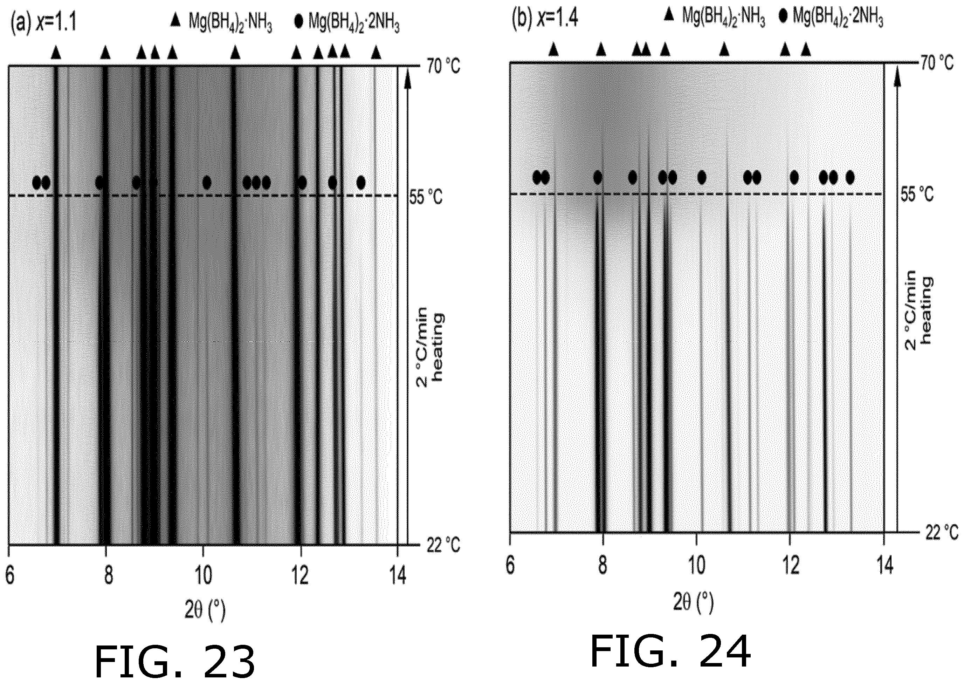

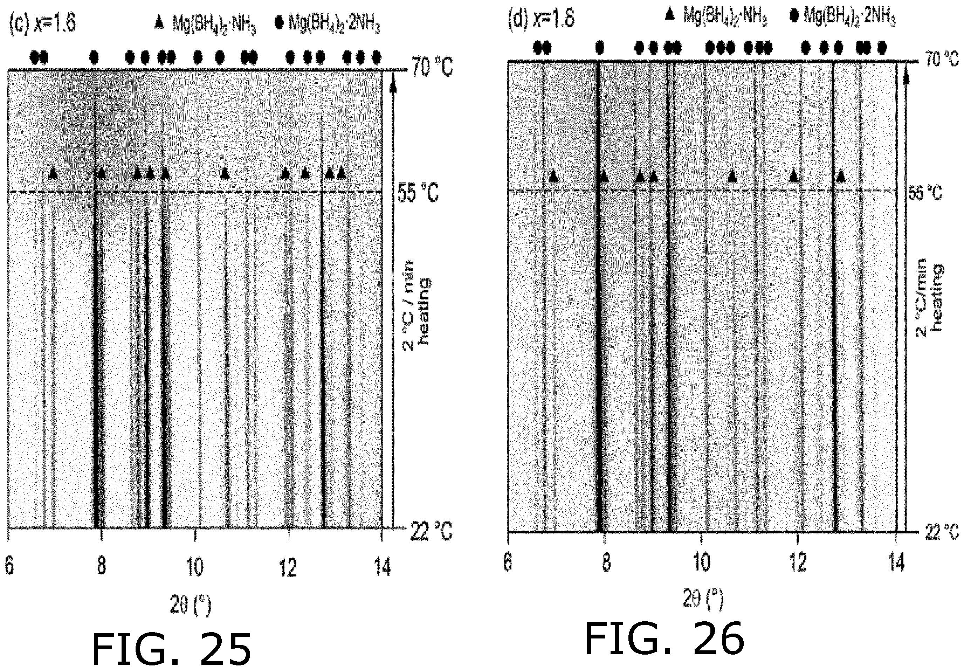

*In situ* synchrotron radiation powder X-ray diffraction (SR XRPD) is measured of the composite, Mg(BH₄)₂·1.5NH₃ upon heating from 22 to 70 °C and further upon cooling from 70 to -120 °C (Figs. 23-26). Bragg reflections of both Mg(BH₄)₂·NH₃ and Mg(BH₄)₂·2NH₃ disappear simultaneously at 55 °C leaving a broad hump in the diffraction background in the remaining experiment. This is a significantly lower melting temperature as compared to the individual components, *T*ₘₚ(Mg(BH₄)₂·NH₃) = 90 °C and *T*ₘₚ(Mg(BH₄)₂·2NH₃) = 110 °C. Further *in situ* diffraction experiments of composites with x < 1.5 reveal diffraction of Mg(BH₄)₂·NH₃ after initial melting at 55 °C (Figs. 23-24) and of Mg(BH₄)₂·2NH₃ for x > 1.5 after initial melting at 55 °C (Figs. 25-26).

Figures 23-26 show *in situ* SR PXD patterns of Mg(BH₄)₂·*x*NH₃, where figures 23-26 correponds to, respectively (as marked with a-d in the upper left corner of each figure): *x*=1.1, 1.4, 1.6, 1.8.

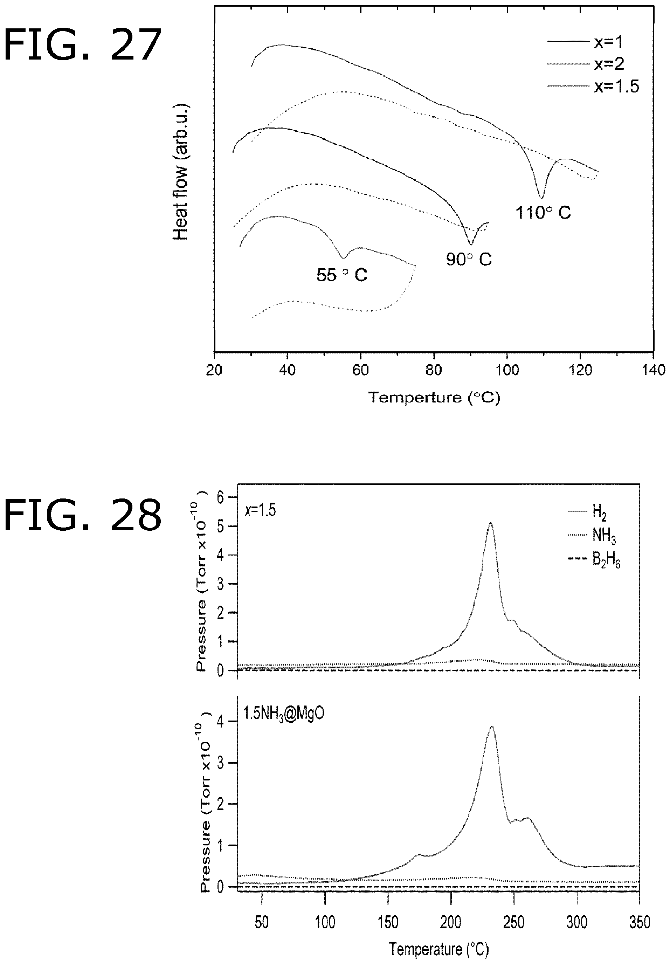

Figure 27 shows DSC profiles of Mg(BH₄)₂·*x*NH₃, *x*=1, 1.5, 2 (where x=1.5 corresponds to the lowest curve having the lowest max-temperature point of the three curves, x=1 corresponds to the middle curve with the max-temperature point being in the middle of the three curves, and x=2 being the uppermost curve with the highest max-temperature point).

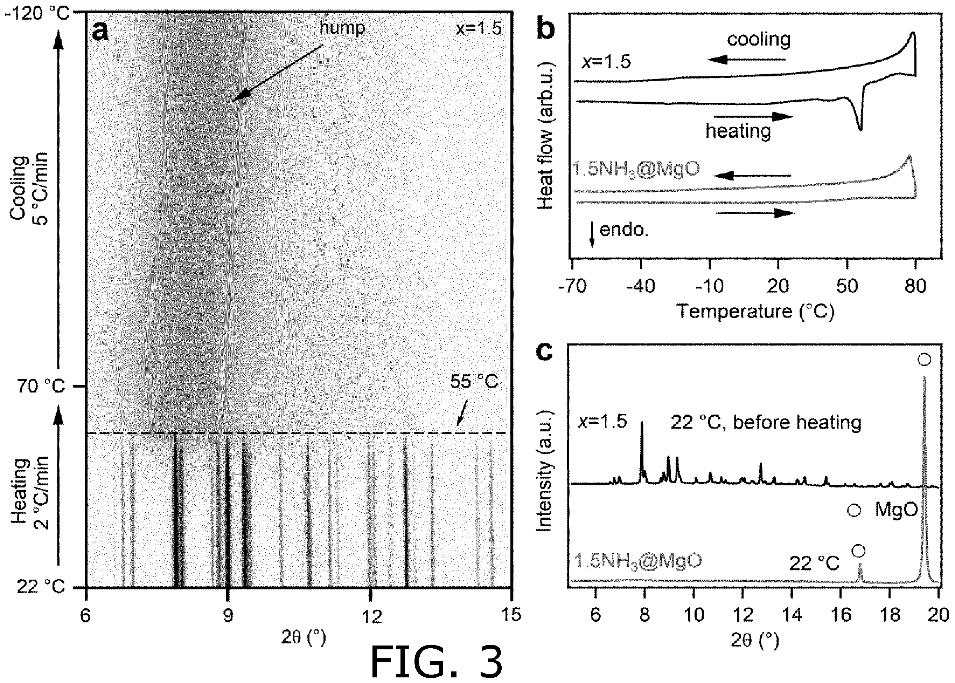

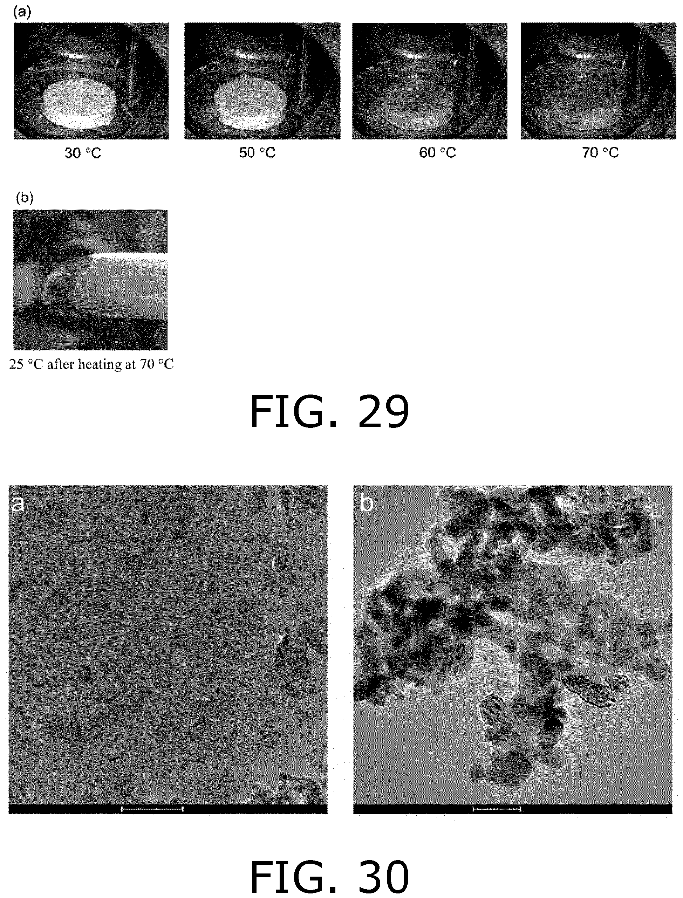

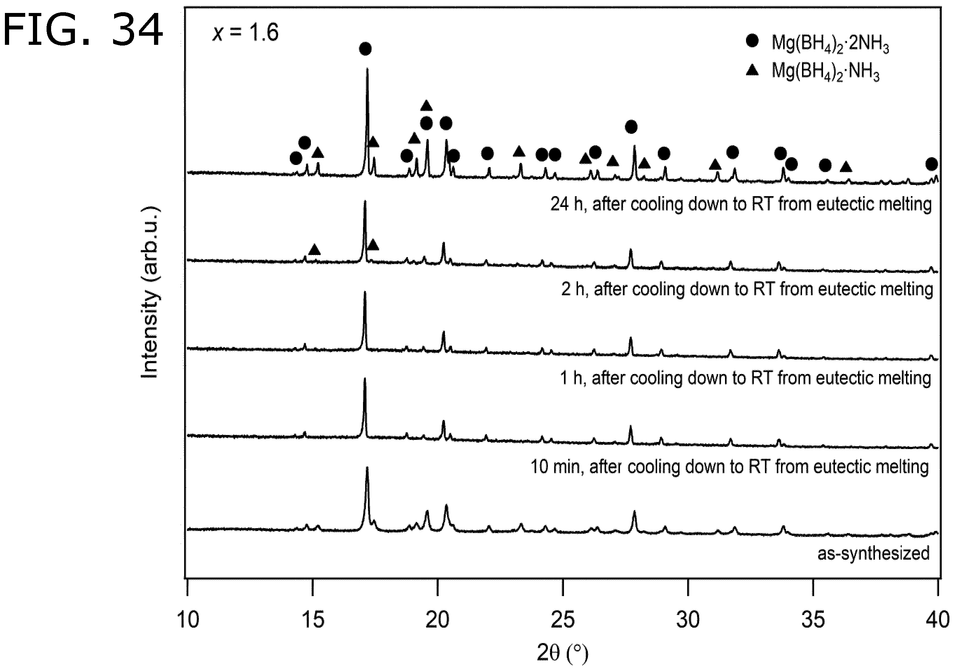

Thermal analysis (DSC) of Mg(BH₄)₂·1.5NH₃ displays an endothermic event at 55 °C, assigned to eutectic melting of the composite. However,no DSC signal upon cooling to -70 °C is observed, which reveal that the molten phase can readily be under-cooled and only slowly and after some time (>10 min) start to crystallise (Figure 3b, see also Fig. 34 for XRPD of Mg(BH₄)₂·1.6NH₃ at different timepoints). Simultaneous measurement of mass spectroscopy reveal no gas release (*e.g.* H2, NH₃ or B₂H₆), at *T <* 130 °C (Fig. 28). This show that the composite do not decompose and is stable also in the molten state. Photographic inspection of a pellet of Mg(BH₄)₂·1.5NH₃ reveal that the shape is preserved also at 60 °C but with the material becoming softer (Fig. 29). Thus, we conclude that Mg(BH₄)₂·NH₃-Mg(BH₄)₂·2NH₃ is eutectic melting, with eutectic temperature *T*ₘₚ = 55 °C, where a liquid phase with high viscosity is formed. If the temperature goes below the eutectic temperature, an amorphous substance or composition is formed (which amorphous substance or composition might not be stable at room temperature, at least on a timescale of one or more weeks). If the resulting composition or substance is kept at room temperature, it slowly starts to crystallize and after a few hours or days (such as 7, 10, 14, 30 or 40 hours, or such as 7, 10, 14, 30 or 40 days) it crystallizes into the two crystalline components, Mg(BH₄)₂·NH₃ and Mg(BH₄)₂·2NH₃. The composite with additive (e.g. MgO or Al₂O₃) forms a 'stable' amorphous, or under-cooled liquid phase for at least 1.5 months. The composite, x=1.5 wihtout additive will crystallise ca. 2 h after it has been melted at *T >* 55 °C, and again cooled to *T* < 55 °C (see data showing that Mg(BH₄)₂·*x*NH₃, x=1.6 starts to crystallize in 2 hr and fully crystallize in 24 hr in Fig. 34).

Figure 28 shows a mass spectra of sample *x*=1.5 and 1.5NH₃@MgO (Ar flow: 40 ml/min, 5 °C/min). The results indicates that the onset decomposition temperatures is around 150 °C for a sample *x*=1.5 and 120 °C for 1.5NH₃@MgO.

Figure 29 shows a shape change of a Mg(BH₄)₂·1.5NH₃. **a**, upon heating from 30 to 70 °C, the pellet keeps the shape. **b**, the pellet is cooled down to 25 °C after being heated at 70 °C, and then is deformed by a sample spatula.

Figure 3 shows (a) *In-situ* synchrotron radiation X-ray powder diffraction (SR PXD) of Mg(BH₄)₂·*x*NH₃ (*x*=1.5), slow heating 22 to 70 °C followed by faster cooling to -120 °C (λ = 0.70848 Å). (b) Differential scanning calorimetry profiles of sample x= 1.5 and the composite 1.5NH₃@MgO. (c) selected diffraction pattern of Mg(BH₄)₂·*x*NH₃ (*x*=1.5) before heating, compared to Mg(BH₄)₂·1.5NH₃-MgO after heating and after cooling (mass ratio 1:3, donated 1.5NH₃@MgO). Unmarked diffraction peaks are assigned to Mg(BH₄)₂·*x*NH₃, *x* = 1 or 2, and diffraction from MgO is marked with a circle (λ = 0.70848 Å).

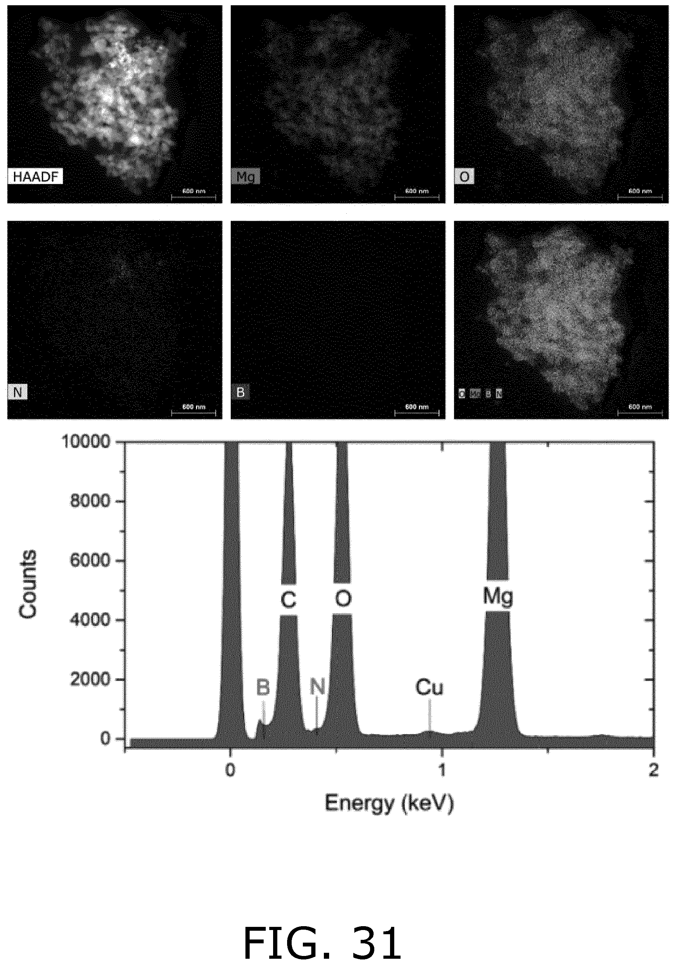

Nano structuring by mechanochemical treatment of Mg(BH₄)₂·1.5NH₃-MgO (1:3 w/w), followed by annealing at 70 °C for 1 h (denoted 1.5NH₃@MgO) is utilized to stabilize the phase formed upon heating above 55 °C. Transmission electron microscopy (TEM) images reveals typical particle sizes of equal to or less than 50 nm (fig 30) and scanning transmission electron microscope (STEM) images confirms an even distribution of B and N originated from the composite Mg(BH₄)₂·1.5NH₃ in 1.5NH₃@MgO (Fig. 31). Thermal analysis (DSC) reveals no obvious thermal events in the temperature range from -70 to 80 °C (Figure 3b), which indicates a high level of stability (in contrast with the lack of stability - in comparison - for Mg(BH₄)₂·1.5NH₃). Powder X-ray diffraction of 1.5NH₃@MgO, as synthesized and after storing 10 or 30 days at RT, only show diffraction from MgO. Furthermore, photographic inspection reveals that the pellet of 1.5NH₃@MgO remains hard with no sign of deformation after heat treatment at 80 °C (as observed by measuring the pellet with an electronic Vernier caliper before and after heating at 80 °C and in each case obtaining a diameter of 6.43 mm).

Figure 30 shows transmission electron microscope (TEM) image. Subfigure **a** shows MgO nanopowders (with a scalebar being 100 nm) and subfigure **b** shows 1.5NH₃@MgO nanocomposite (with a scalebar being 200 nm).

Figure 31 shows scanning transmission electron microscopy (STEM) image and energy-dispersive X-ray spectroscopy (EDS) of a particle of 1.5NH₃@MgO nanocomposite. The error bars in the six images are 600 nm. The images shows in the upper row (from left to right): High-angle annular dark-field imaging (HAADF), Mg, O. The images shows in the lower row (from left to right): N, B, and in the last image (in the lower right corner) an overlay of O, Mg, B and N.

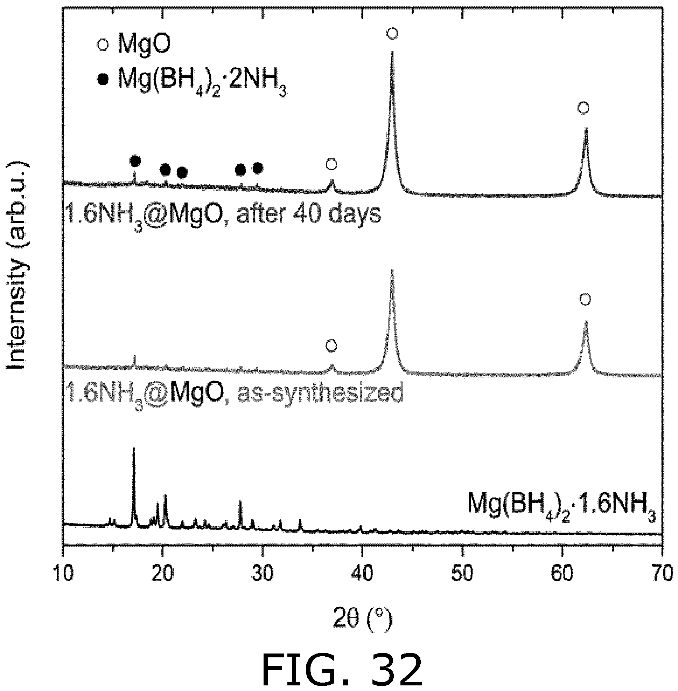

Figure 32 shows PXD patterns of sample Mg(BH₄)₂·1.6NH₃, and the 1.6NH₃@MgO nanocomposite: as-synthesized and after being kept at room temperature for 40 days. Cu Kα, λ=1.54056 Å. The sample Mg(BH₄)₂·1.6NH₃ is the as-synthesized sample, in which one can clearly see two compounds, that is Mg(BH₄)₂·*x*NH₃, x=1 and x=2. In the 1.6NH₃@MgO, one can only observe weak reflections from Mg(BH₄)₂·*x*NH₃, x=2. That is because Mg(BH₄)₂·*x*NH₃, x=1 and some of x=2 are stabilized in an amorphous state, such as molten phase, owing to addition of MgO.

To repeat, if there is no additive, such as MgO, x=1.6 sample will recrystallize completely in 24 h.

Figure 34 shows a diffraction pattern for Mg(BH₄)₂·1.6NH₃ at different time points. More particularly, the figure shows diffraction patterns for Mg(BH₄)₂·1.6NH₃ for an as-synthesized sample (where diffraction peaks are observed for each of Mg(BH₄)₂·*x*NH₃, x=1 and x=2), and then after cooling down to RT, more specifically at time points 10 minutes, 1 hour, 2 hours and 24 hours after cooling down to RT. The figure shows that Mg(BH₄)₂·*x*NH₃, x=1.6 starts to crystallize in 2 hr and fully crystallize in 24 hr in after cooling down to RT.

### The structure of the compounds

Magnesium is coordinated to four borohydride complexes in the structure of all polymorphs of Mg(BH₄)₂, and each BH₄⁻ is bridging two Mg by edge sharing (η²). One ammonia molecule interrupts this structure to form zig-zag chains of -BH₄-Mg-BH₄-Mg along the *b*-axis in the structure of Mg(BH₄)₂·NH₃. In this structure magnesium is tetrahedrally coordinated, by three BH₄⁻, two bridging (η²) and one terminal (η³), and one NH₃ molecule. In contrast, the structures of Mg(BH₄)₂·2NH₃ and Mg(BH₄)₂·3NH₃ are built from neutral molecular complexes with the same composition as the formula units.^{22,23} Crystalline Mg(BH₄)₂·6NH₃ contain octahedral cationic complexes, [Mg(NH₃)₆]²⁺ and BH₄⁻ acting as counter ions, which highlights the coordination flexibility of borohydride complexes. Further structural information can be found in the supplementary information.

### The ion conductivity mechanism of the compounds

The high magnesium ion conductivities of this new class of materials is surprising and is here thoroughly investigated combining experimental diffraction techniques and density functional theory (DFT) simulation in order to combine information about the average long range structure and theoretical investigation of intermediate conformations. Here we first analyze the 'static' crystal structures by X-ray diffraction, which reveal a possible ion conductivity path through the bulk material. Then the structure and interstitial Mg positions are structurally optimized using DFT. The latter approach provide information about the mechanism for the ion conductivity.

A possible Mg²⁺ migration path in the solid state is calculated for the crystal structure of Mg(BH₄)₂·NH₃ using Voronoi-Dirichlet Polyhedra (VDP)²⁷ analysis approximating molecules and ions as spheres, *r*(BH₄⁻) = 2.03 Å, *r*(NH₃) = 1.55 Å and *r*(Mg²⁺) = 0.71 Å. Interstitial cation sites are located in coordination polyhedra and the mobility is limited by the aperture of the triangular face of three BH₄⁻ and/or NH₃, denoted a 'bottleneck'. Channels are constructed by connecting voids large enough to accommodate Mg²⁺, and with sufficient size of the bottleneck, *r*_{b} > *r*(Mg²⁺) to allow mobility. The Mg voids of interstitial positions clearly create a network, which is both branched and three-dimensional. This is the prerequisite of mobility and conductivity of Mg²⁺ in the solid state.

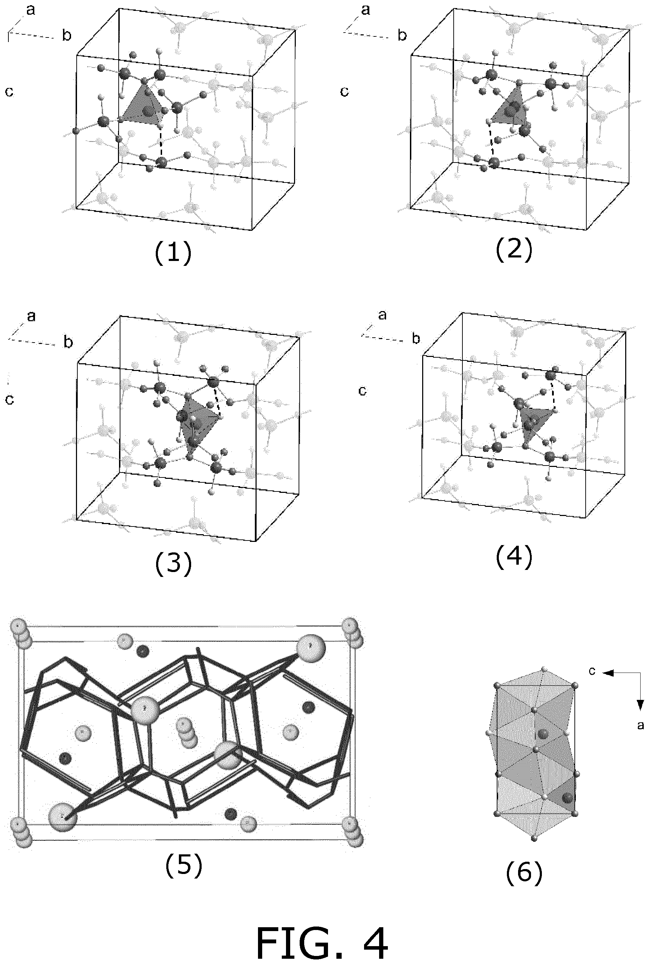

Figure 4 illustrates the conduction channels of Mg(BH₄)₂·NH₃ along the *b*-direction, where zig-zag chains are formed.

Figure 4 shows conduction channels of Mg(BH₄)₂·NH₃ viewed along the *b*-axis, the *a*-axis is horizontal, subfigures 4(1)-4(4) show some DFT optimizations of magnesium in interstitial positions The conduction channels of x=1 is shown in figure 4(5) and 4(6).

Structure optimization using DFT is utilized to investigate the coordination of magnesium in interstitial positions, denoted Mg(i1), Mg(i2) etc., for corresponding sub-figures 4(1), 4(2), etc., as compared to those in the crystal structure of Mg(BH₄)₂·NH₃. For both structures, Mg(BH₄)₂·NH₃ and Mg(BH₄)₂·2NH₃, interstitial Mg is coordinated by both NH₃ and BH₄ donated from nearby Mg ions in the structure. Clearly, Mg interstitials become more stable with at least one NH₃ group in the nearest coordination sphere as compared to being coordinated by BH₄ complexes only.

In the structure of Mg(BH₄)₂·NH₃, the stable interstitial sites (within the energy difference of 0.1 eV) are positioned along the *b*-direction similar to the zigzag -BH₄-Mg-BH₄-Mg chain. The interstitial sites are located with a distance of >2.4 Å and in close proximity to NH₃ and terminal BH₄ groups. Sub-Figures 4(1) to 4(4) follow an interstitial Mg moving three steps mainly in the b-axis direction. When a Mg²⁺ enters position Mg(i1) (see sub-Figure 4(1)) it will coordinate to an ammonia molecule and thereby the number of coordinating ligands is reduced from 4 to 3 of the donating framework (i.e., in the crystal structure) Mg(f1) atom. Thus, the NH₃-depletion of Mg(f1) change coordination to planar trigonal by three BH₄⁻(η²). The interstitial Mg(i1) also coordinate two terminal BH₄ groups, which become bridging, and one bridging BH₄⁻, which is then shared by three Mg²⁺. This highlights the coordinative structural flexibility of BH₄⁻ complexes.

The interstitial magnesium, Mg(i1), can jump to position Mg(i2) through the face of the tetrahedron, keeping the coordination to ammonia and one BH₄⁻. Mg(i2) also coordinate a new bridging BH₄⁻, which is then shared by three Mg²⁺, and a terminal, which become bridging.

In the jump to position Mg(i3) (sub-figure 4(3)) ammonia is delivered back to Mg(f1) and another NH₃ molecule is borrowed from Mg(f2). This position is five-coordinated.

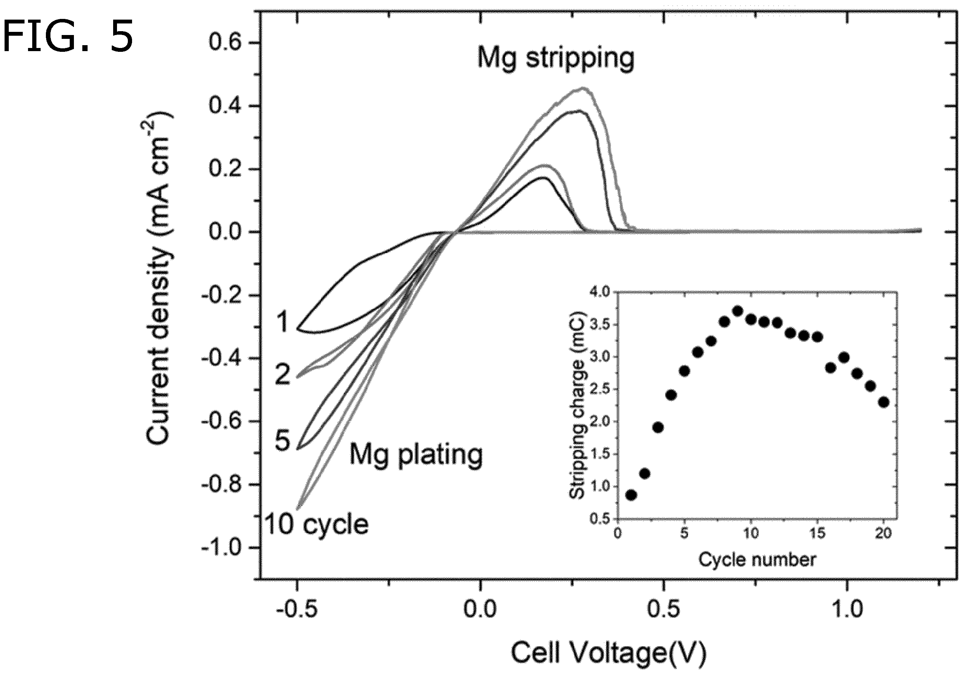

Figure 5 shows a cyclic voltammogram of an Au/1.6NH₃@MgO/Mg cell at 60 °C. The inset shows the Mg stripping current as a function of cycle number. The curves are shown for cycles 1, 2, 5 and 10 with Mg plating in the left-hand side (i.e., for voltages below -0.1 V) and striping in the right hand side (i.e., for voltages above -0.1 V). For the left hand side with plating, the curves (at least the low-voltage end-points) are displaced vertically (along the current density axis) to each other with the curve for 10 cycles being at the bottom, the curve for 5 cycles being above that, the curve for 2 cycles being above that and the curve for 1 cycle being topmost. For the right hand side with stripping, the curves (at least the top-points) are displaced vertically (along the current density axis) to each other with the curve for 1 cycle being at the bottom, the curve for 2 cycles being above that, the curve for 5 cycles being above that and the curve for 10 cycles being topmost.

The 1.6NH₃@MgO nanocomposite is selected for cyclic voltammetry measurement to confirm the direct Mg-ion conduction through the electrolyte. An asymmetric Au/1.6NH₃@MgO/Mg cell was assembled and tested at 60 °C. As shown in Figure 5, the onset of cathodic current attributed to the Mg plating on the Au working electrode is observed at -0.1 V. The anodic current during the reverse sweep between -0.1 and 0.5 V is owing to Mg stripping. The currents of plating/stripping increase during the first ten cycles (see Figure 5 inset), implying that the interfacial contact between electrodes and electrolyte is improved during the initial cycling. No significant currents due to electrolyte decomposition is detected in the scanned voltage range. The electrochemical stability window of 1.2 V is compatible with typical cathode materials for Mg-ion batteries such as TiSe₂ (1.0 V *vs* Mg/Mg²⁺), Mo₆S₈ (1.1 V *vs* Mg/Mg²⁺), and Ti₂S₄ (1.2 V *vs* Mg/Mg²⁺).²¹ In the following-up striping/plating cycles between -0.5 and 2.5 V, irreversible oxidation > 1.2 V is observed (Supplementary Fig. 22). However, the interface layer formed owing to the irreversible oxidation is able to conduct Mg ions and further improve the electrochemical stability. At 40^{th} cycle, no obvious oxidation is observed below 2.5 V and stable striping/plating is observed up to 60 cycles indicating the high stability of the interface layer. This finding will benefit the application of the 1.6NH₃@MgO composite as a solid electrolyte for Mg-ion battery, *i.e.* the over-potential charging will not damage the electrolyte.

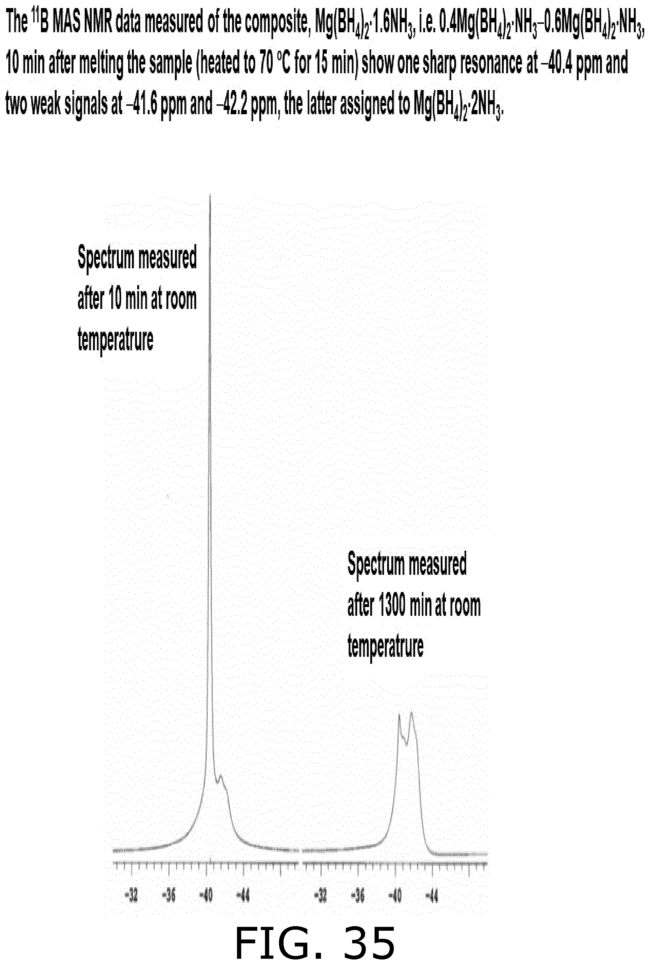

Figure 35 shows an NMR spectra of the composite Mg(BH₄)₂·1.6NH₃. The two compounds Mg(BH₄)₂·NH₃ and Mg(BH₄)₂·2NH₃ have distinct ¹¹B MAS NMR resonances. Mg(BH₄)₂·NH₃ have two resonances with peak values at -40.4 ppm and -40.8 ppm. Mg(BH₄)₂·2NH₃ have two resonances with peak values at -41.6 ppm and -42.2 ppm. The ¹¹B MAS NMR data measured of the composite, Mg(BH₄)₂·1.6NH₃, i.e. 0.4Mg(BH₄)₂·NH₃-0.6Mg(BH₄)₂-NH₃, 10 min after melting the sample (heated to 70 °C for 15 min) show one sharp resonance at -40.4 ppm and two weak signals at -41.6 ppm and -42.2 ppm, the latter assigned to Mg(BH₄)₂·2NH₃. The sharp intense signal account for about 70 % of boron in the sample. This signal has only very weak spinning side bands in contrast to the resonances from Mg(BH₄)₂·2NH₃, which have many. The sharp resonance at -40.4 ppm is assigned to high symmetry and/or dynamics (e.g. similar to liquid state) of boron in this part of the sample, i.e. the under-cooled eutectic melt. The ¹¹B MAS NMR spectrum after 1300 min is mainly a sum of spectra of Mg(BH₄)₂·NH₃ and Mg(BH₄)₂·2NH₃ with a small contribution from the molten state of the sample.

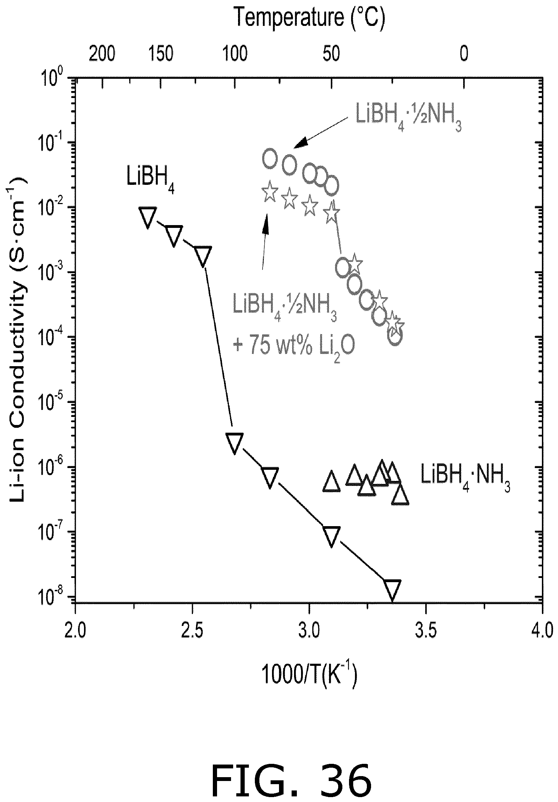

Figure 36 shows temperature dependent ionic conductivities of LiBH₄, LiBH₄·NH₃, LiBH₄·½NH₃, and LiBH₄·½NH₃, with 75 wt% Li₂O. The sample 'LiBH₄-0.5NH₃' contains 33 wt% Li₂O and is prepared according to the reaction scheme shown in the text (data shown as open circles). Extra Li₂O is added to this sample (or to such sample) to reach 75 wt% (data shown as stars). All data is measured during heating the sample.

**Table 1. Structure data of Mg(BH₄)₂·NH₃ extracted from Rietveld refinement.**

| Atom | x / a | y / b | z / c | Wyckoff site | Occupancy |
|---|---|---|---|---|---|
| B1 | 0.50000 | 0.50000 | 0.50000 | 4a | 1 |
| H11 | 0.56403 | 0.41279 | 0.39145 | 8d | 0.5 |
| H12 | 0.53049 | 0.65397 | 0.49965 | 8d | 0.5 |
| H13 | 0.50477 | 0.44475 | 0.66684 | 8d | 0.5 |
| H14 | 0.40029 | 0.48929 | 0.44337 | 8d | 0.5 |
| B2 | 0.1908(3) | 0.75000 | 0.5201(4) | 4c | 1 |
| H21 | 0.0907(3) | 0.75000 | 0.5792(4) | 4c | 1 |
| H22 | 0.2594(3) | 0.75000 | 0.6609(4) | 4c | 1 |
| H23 | 0.2078(3) | 0.87959 | 0.4201(4) | 8d | 1 |
| N | 0.6283(3) | 0.25000 | 0.8916(4) | 4c | 1 |
| H31 | 0.5937(3) | 0.36051 | 0.9422(4) | 8d | 1 |
| H32 | 0.7089(3) | 0.25000 | 0.9486(4) | 4c | 1 |
| Mg | 0.6210(2) | 0.25000 | 0.5939(2) | 4c | 1 |

**Table 2. Summary of structural information for Mg(BH4)2-xNH3.**

| **X** | **Crystal system** | ***Space group*** | **Lattice parameter /** Å | **CN** | **CN (H)** | ***M*-B Distance/Å** | ***M*-N Distance/Å** | **V/Mg** | **Topology** |
|---|---|---|---|---|---|---|---|---|---|
| **Mg(BH₄)₂-xNH₃** | | | | | | | | | |
| 0 | Cubic (y-phase) | *Ia-3d* | 15.7575(16) | 4 | 8 | 2.4131 | | 115 | 3D network, Shared unit of [Mg(BH₄)₄] |
| 1 | Orthorho mbic | *Pnma* | 11.2938(1), 7.6224(1), 6.8182(1) | 4 | 8 | 2.27-2.43 | 2.03 | 147 | Zig-zag chain of [Mg(BH₄)₂NH₃] |
| 2 | Orthorho mbic | *Pcab* | 17.4872(4), 9.4132(2), 8.7304(2) | 4 | 7 | 2.33-2.45 | 2.03-2.15 | 180 | Molecular [Mg(BH₄)₂(NH₃)₂] |
| 3 | Orthorho mbic | *Pnma* | 11.4328, 8.0869, 9.4379 | 5 | 7 | 2.50-2.52 | 2.16-2.21 | 218 | Molecular [Mg(BH₄)₂(NH₃)₃] |
| 6 | Cubic | *Fm-*3*m* | 10.7879 | 6 | 6 | 4.67 | 2.22 | 318 | Ionic complexes [Mg(NH₃)_{6]}(BH₄)₂ |

**Table 3. Summary apparent activation energy (Eₐ) for cation hopping and cation conductivity (σ) of Mg(BH₄)₂·xNH₃ and the nanocomposite**

| | ***E*ₐ/eV** | **σ/S·cm⁻¹ (at 50 °C)** |
|---|---|---|
| **Mg(BH₄)₂-xNH₃** | | |
| 0 | | 1.0 × 10^{-12 a} |
| 0.4 | 2.59 | 2.5 × 10⁻⁸ |
| 1 | 2.2 | 4.0 × 10⁻⁷ |
| 1.1 | 1.5 (< 60 °C) | 6.3 × 10⁻⁵ |
| 1.5 | 3.4 (< 60 °C) | 1.8 × 10⁻⁴ |
| 1.6 | 3.3 (< 60 °C) | 3.1 × 10⁻⁴ |
| 2 | 2.2 | 1.6 × 10⁻⁹ |
| 2.1 | 2.26 | 1.6 × 10⁻⁷ |
| 2.5 | 1.86 | 1.5 × 10⁻⁷ |
| 3 | 1.9 | 4.7 × 10⁻⁵ |
| 4.5 | 1.36 | 1.0 × 10⁻⁹ |
| 6 | - | 4.7 × 10⁻⁸ |
| **Mg(BH₄)₂-1.5NH₃ + MgO (w/w 1:3)** | 0.94 | 5.8 × 10⁻⁵ |
| **Mg(BH₄)₂-1.6NH₃ + MgO (w/w 1:2)** | 3.2 (< 60 °C) | 3.2 × 10⁻⁴ |
| **Mg(BH₄)₂-1.6NH₃ + MgO (w/w 1:3)** | 1.04 | 1.8 × 10⁻⁴ |
| **Mg(BH₄)₂-1.6NH₃ + MgO (w/w 1:5)** | 0.94 | 3.2 × 10⁻⁶ |
| **Mg(BH₄)₂-1.6NH₃ + Al₂O₃ (w/w 1:1.5)** | 1.52 (< 60 °C) | 3.8 × 10⁻⁴ |
| **Mg(BH₄)₂-1.6NH₃ + Al₂O₃ (w/w 1:2)** | 0.49 | 2.1 × 10⁻⁴ |
| **Mg(BH₄)₂·1.6NH₃ + Al₂O₃ (w/w 1:3)** | 0.58 | 4.7 × 10⁻⁵ |
| **Mg(BH₄)₂-1.6NH₃ + SiO₂ (w/w 1:1)** | 0.63 | 1.1 × 10⁻⁴ |

| | | |
|---|---|---|
| a: Roedern, E., Kuhnel, R. S., Remhof, A. & Battaglia, C. Magnesium Ethylenediamine Borohydride as Solid-State Electrolyte for Magnesium Batteries. Sci Rep-Uk 7, doi:ARTN 4618910.1038/srep46189 (2017). | | |

### References

1 Saha, P. et al. Rechargeable magnesium battery: Current status and key challenges for the future. Prog Mater Sci 66, 1-86, doi:http://dx.doi.org/10.1016/j.pmatsci.2014.04.001 (2014).
2 Muldoon, J. et al. Electrolyte roadblocks to a magnesium rechargeable battery. Energ Environ Sci 5, 5941-5950, doi:Doi 10.1039/C2ee03029b (2012).
3 Park, M., Zhang, X., Chung, M., Less, G. B. & Sastry, A. M. A review of conduction phenomena in Li-ion batteries. J Power Sources 195, 7904-7929, doi:https://doi.org/10.1016/j.jpowsour.2010.06.060 (2010).
4 Arora, P. & Zhang, Z. Battery Separators. Chem Rev 104, 4419-4462, doi:10.1021/cr020738u (2004).
5 Canepa, P. et al. High magnesium mobility in ternary spinel chalcogenides. Nat Commun 8, 1759, doi:10.1038/s41467-017-01772-1 (2017).
6 Imanaka, N., Okazaki, Y. & Adachi, G.-y. Divalent Magnesium Ionic Conduction in the Magnesium Phosphate Based Composites. (1999).
7 Imanaka, N., Okazaki, Y. & Adachi, G. Divalent Magnesium Ionic Conduction in Mg1 - 2x (Zr1 - x Nb x) 4 P 6 O 24 (x = 0 - 0.4) Solid Solutions. Electrochemical and Solid-State Letters 3, 327-329, doi:10.1149/1.1391138 (2000).
8 Wang, Y. et al. Design principles for solid-state lithium superionic conductors. Nat Mater 14, 1026-+, doi:10.1038/Nmat4369 (2015).
9 Paskevicius, M. et al. Metal borohydrides and derivatives - synthesis, structure and properties. Chem Soc Rev 46, 1565-1634, doi:10.1039/c6cs00705h (2017).
10 Kamaya, N. et al. A lithium superionic conductor. Nat Mater 10, 682-686, doi:DOI: 10.1038/NMAT3066 (2011).
11 Kato, Y. et al. High-power all-solid-state batteries using sulfide superionic conductors. Nature Energy 1, 16030, doi:10.1038/nenergy.2016.30 http://www.nature.com/articles/nenergy201630#supplementary-information (2016).
12 Tang, W. S. et al. Unparalleled lithium and sodium superionic conduction in solid electrolytes with large monovalent cage-like anions. Energ Environ Sci 8, 3637-3645, doi:10.1039/C5EE02941D (2015).
13 Tang, W. S. et al. Liquid-Like Ionic Conduction in Solid Lithium and Sodium Monocarba-closo-Decaborates Near or at Room Temperature. Adv Energy Mater, n/a-n/a, doi:10.1002/aenm.201502237 (2016).
14 Tang, W. S. et al. Stabilizing Superionic-Conducting Structures via Mixed-Anion Solid Solutions of Monocarba-closo-borate Salts. ACS Energy Letters 1, 659-664, doi:10.1021/acsenergylett.6b00310 (2016).
15 Paskevicius, M., Hansen, B. R. S., Jorgensen, M., Richter, B. & Jensen, T. R. Multifunctionality of silver closo-boranes. Nat Commun 8, doi:ARTN 15136 10.1038/ncomms15136 (2017).
16 Tang, W. S. et al. Order-Disorder Transitions and Superionic Conductivity in the Sodium nido-Undeca(carba)borates. Chem Mater 29, 10496-10509, doi:10.1021/acs.chemmater.7b04332 (2017).
17 Imanaka, N., Okazaki, Y. & Adachi, G. Optimization of divalent magnesium ion conduction in phosphate based polycrystalline solid electrolytes. Ionics 7, 440-446, doi:10.1007/BF02373581 (2001).
18 Anuar, N. K., Adnan, S. B. R. S. & Mohamed, N. S. Characterization of Mg0.5Zr2(PO4)3 for potential use as electrolyte in solid state magnesium batteries. Ceram Int 40, 13719-13727, doi:https://doi.org/10.1016/j.ceramint.2014.05.013 (2014).
19 Higashi, S., Miwa, K., Aoki, M. & Takechi, K. A novel inorganic solid state ion conductor for rechargeable Mg batteries. Chem Commun 50, 1320-1322, doi:Doi 10.1039/C3cc47097k (2014).
20 Roedern, E., Kuhnel, R. S., Remhof, A. & Battaglia, C. Magnesium Ethylenediamine Borohydride as Solid-State Electrolyte for Magnesium Batteries. Sci Rep-Uk 7, doi:ARTN 46189 10.1038/srep46189 (2017).
21 Canepa, P. et al. Odyssey of Multivalent Cathode Materials: Open Questions and Future Challenges. Chem Rev 117, 4287-4341, doi:10.1021/acs.chemrev.6b00614 (2017).
22 Soloveichik, G. et al. Ammine Magnesium Borohydride Complex as a New Material for Hydrogen Storage: Structure and Properties of Mg(BH4)2·2NH3. Inorg Chem 47, 4290-4298, doi:10.1021/ic7023633 (2008).
23 Jepsen, L. H., Ley, M. B., Filinchuk, Y., Besenbacher, F. & Jensen, T. R. Tailoring the Properties of Ammine Metal Borohydrides for Solid - State Hydrogen Storage. Chemsuschem 8, 1452-1463, doi:doi:10.1002/cssc.201500029 (2015).
24 Filinchuk, Y. et al. Porous and Dense Magnesium Borohydride Frameworks: Synthesis, Stability, and Reversible Absorption of Guest Species. Angew Chem Int Edit 50, 11162-11166, doi:DOI 10.1002/anie.201100675 (2011).
25 Jepsen, L. H. et al. Synthesis, Crystal Structure, Thermal Decomposition, and 11B MAS NMR Characterization of Mg(BH4)2(NH3BH3)2. The Journal of Physical Chemistry C 118, 12141-12153, doi:10.1021/jp502788j (2014).
26 Favre-Nicolin, V. & Cerny, R. FOX, 'free objects for crystallography': a modular approach to ab initio structure determination from powder diffraction. J Appl Crystallogr 35, 734-743, doi:doi:10.1107/S0021889802015236 (2002).
27 Blatov, V. A. Nanocluster analysis of intermetallic structures with the program package TOPOS. Struct Chem 2012, 23, 955-963).

To sum up, there is presented a composition of matter comprising a substance or composition with average chemical formula Mg(BH4)2·xNH3, wherein x is non-integer and less than 2.2, such as 1<x<2, and optionally further comprising an additive, such as an oxide optinonally being in the form of nanoparticles. The composition of matter may be advantageous for being based on the abundant element magnesium and/or for exhibiting a very high ionic conductivity and/or very low electronic conductivity.

### Example with LiBH₄·½NH₃

### Synthesis

Chemicals of LiBH₄ (purity > 98%), LiNH₂ (purity > 98%), LiOH (purity > 98%) were purchased from Sigma-Aldrich, Fullerene C₆₀ (purity > 99.5%) from IOLITEC, respectively.

LiBH₄·½NH₃ was synthesized by ball milling of LiBH₄, LiNH₂ and LiOH were ball milled in a molar ratio of 2:1:1 using a Fritsch Pulverisette 6 planetary mill equipped with a 80 mL tungsten carbide (WC) vial and balls (10 mm o.d.). The ball milling were carried out for 5 min with a 2 min pause for 6 repetitions at a speed of 350 rpm and a ball-to-powder weight ratio of 50:1. Afterwards, the mixture was annealed at 80 °C for 12 h in Argon atmosphere. The as-synthesized LiBH₄·½NH₃ was analyzed to be composed of 66.7 wt% LiBH₄·½NH₃ and 33.3 wt% Li₂O.

LiBH₄·1/2NH₃ was prepared by mechanochemical synthesis from LiBH₄, LiNH₂ and LiOH in a molar ratio of 2:1:1, followed by a heat treatment (at T = 80 °C for 12 hours under Ar atmosphere). The as-prepared sample has a purity of 66.7 wt% with 33.3 wt% Li₂O as byproduct according to the reaction scheme below:

2LiBH₄ + LiNH₂ + LiOH →2 LiBH₄·1/2NH₃ + Li₂O

The above mentioned method of preparing LBH₄·1/2NH₃ is novel. It may furthermore be noted, that it may be industrially applicable.

### Results

Li-ion conductivity reaches 3.0 × 10⁻² S·cm⁻¹ at 50 °C in the sample from the reaction above, i.e., with 33 wt% Li₂O and 66.7 wt% LiBH₄·½NH₃.

### Embodiments according to the example with LiBH₄·½NH₃

*E1.* A composition of matter comprising a substance or composition with chemical formula *Li(BH4)·0.5NH₃.*
E2.A composition of matter according to embodiment E2, further comprising an additive (optionally in the form of particles, such as nanoparticles), such as Li₂O.
*E3*. The composition of matter according to any one of the preceding embodiments E1-E2, wherein the ionic conductivity at a temperature of 323.15 K or at 50 °C of the composition of matter is equal to or larger than 3x=10⁻² S·cm⁻¹ and/or wherein the ionic conductivity at a temperature of 298.15 K or at 25 °C of the composition of matter is equal to or larger than 1x10⁻² S·cm⁻¹.
*E4*. The composition of matter according to any one of the preceding embodiments E1-E3, wherein the additive has an electronic conductivity smaller than σ < 10⁻⁷ S cm⁻¹, such as σ < 10⁻⁸ S cm⁻¹, such as σ < 10⁻⁹ S cm⁻¹, such as σ < 10⁻¹⁰ S cm⁻¹, such as σ < 10⁻¹¹ S cm⁻¹, such as σ < 10⁻¹² S cm⁻¹, at a temperature of 298.15 K (or 25 °C).
E5.The composition of matter according to any one of the preceding embodiments E1-E4, wherein the additive is an oxide.
E6.The composition of matter according to any one of the preceding embodiments E1-E5, wherein the additive comprises particles with a largest dimension being less than 1 mm, such as less than 0.1 mm, such as less than 10 micrometer, such as less than 1 micrometer, such as less than 0.1 micrometer, such as less than 10 nanometer.
E7.The composition of matter according to any one of the preceding embodiments E1-E6, wherein the composition of matter is a fast ion conductor.
E8.A battery or an electrochemical cell comprising a composition of matter according to any one of the preceding embodiments E1-E7.
E9.A method for preparing a composition of matter according to any one of embodiments E1-E8, said method comprising a mechanochemical treatment.
E10. Use of a composition of matter according to any one of embodiments E1-E8, for conducting an ionic current.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A composition of matter comprising a substance or composition with average chemical formula Mg(BH4)2·xNH3, wherein x is non-integer and less than 2.2, such as less than 2.15 or such as less than 2.1 or such as less than 2.0 or such as than 1.9 or such as at least 0.7 or such as at least 0.8 or such as at least 0.9 or such as 1<x<2 or such as x>1.1 and/or x<1.9 (such as x=1.2 or x=1.57 or x=1.78) or such as 1.1<x<1.9 or such as x>1.4 and/or x<1.8 or such as x>1.5 and/or x<1.8 or such as x=1.57 or x=1.6 x=1.78.

2. A composition of matter according to any one of the preceding claims, wherein the composition of matter is further comprising an additive, such as an inert additive.

3. A composition of matter according to any one of the preceding claims,
- wherein 1<x<2, such as 1.05<x<1.95, such as 1.10<x<1.9, such as x=1.6.

4. A composition of matter according to any one of the preceding claims, comprising regions, such as grains or crystals, having an eutectic composition, such as an eutectic composition for the a binary chemical mixture with the two components being Mg(BH₄)₂·xNH₃ with x=1 and Mg(BH₄)₂·xNH₃ with x = 2.

5. A composition of matter according to any one of the preceding claims, comprising, such as consisting of, an amorphous or non-crystalline substance or composition, such as grains.

6. The composition of matter according to any one of the preceding claims, wherein the ionic conductivity, such as the magnesium ionic conductivity, at a temperature of 323.15 K or at 50 °C of the composition of matter is larger than 4x10⁻⁷ S·cm⁻¹, such as equal to or larger than 5x10⁻⁷ S·cm⁻¹ S·cm⁻¹, such as equal to or larger than 1x10⁻⁶ S·cm⁻¹, such as equal to or larger than 3x10⁻⁶ S·cm⁻¹, such as equal to or larger than 1x10⁻⁵ S·cm⁻¹ S·cm⁻¹, such as equal to or larger than 3x10⁻⁵ S·cm⁻¹, such as equal to or larger than 1x10⁻⁴ S·cm⁻¹, such as equal to or larger than 3x10⁻⁴ S·cm⁻¹, such as equal to or larger than 3.5x10⁻⁴ S·cm⁻¹.

7. The composition of matter according to claim 2, wherein the additive is an oxide, such as any one or more of, MgO, SiO₂ and Al₂O₃.

8. The composition of matter according to any one of claims 2 or 7, wherein the additive comprises particles with a largest dimension being less than 1 mm, such as less than 0.1 mm, such as less than 10 micrometer, such as less than 1 micrometer, such as less than 0.1 micrometer, such as less than 10 nanometer,
and/or
wherein the composition of matter is a fast ion conductor, such as σ(Mg²⁺) > 10⁻⁴ S cm⁻¹ at a temperature of 298.15 K (or 25 °C).

9. The composition of matter according to any one of the preceding claims, wherein the composition of matter is compatible with metallic Mg, and/or
wherein the electrochemical window, such as the electrochemical stability window, (vs Mg/Mg²⁺) is equal to or larger than 1.2 V, such as larger than 1.5 V, such as larger than 2.0 V, such as equal to or larger than 2.5 V.

10. A battery or an electrochemical cell comprising a composition of matter according to any one of the preceding claims, such as a battery or an electrochemical cell with an electrode wherein the electrode comprises (such as consists of) magnesium.

11. A method for preparing a composition of matter according to any one of
claims 1-9, said method comprising
- Providing a mixture of a plurality of reactants including:
i. a compound with stoichiometric formula Mg(BH₄)₂·yNH₃, and
ii. a compound with stoichiometric formula Mg(BH₄)₂·zNH₃, where y<x<z , such as y=1 and/or z=2,
- subjecting said mixture to a mechanochemical treatment.

12. A method for preparing a composition of matter according to claim 11, said method further comprising subsequent to the mechanochemical treatment
- heating the mixture above an eutectic temperature,
- cooling the mixture below the eutectic temperature to form an eutectic composition.

13. A method for preparing a composition of matter according to any one of claims 11-12, said method further comprising solvent based synthesis and/or solid-gas reactions and/or gas-liquid synthesis.

14. A composition of matter prepared according to any one of claims 11-13.

15. Use of a composition of matter according to any one of claims 1-9 and/or prepared according to the method of any one of claims 11-13 for conducting an ionic current.
